Europäisches Patentamt

European Patent Office

Office européen des brevets

(19)

(11) Veröffentlichungsnummer: **0 266 513 B1**

# (12) EUROPÄISCHE PATENTSCHRIFT

(45) Veröffentlichungstag der Patentschrift: 04.12.91

(21) Anmeldenummer: 87113065.4

(22) Anmeldetag: 08.09.87

(51) Int. Cl.⁵: **C08L 101/00, H01B 3/30,** //(C08L101/00,83:04)

(54) Modifiziertes Reaktionsharz, Verfahren zu seiner Herstellung und seine Verwendung.

(30) Priorität: 07.10.86 DE 3634084

(43) Veröffentlichungstag der Anmeldung:
11.05.88 Patentblatt 88/19

(45) Bekanntmachung des Hinweises auf die Patenterteilung:
04.12.91 Patentblatt 91/49

(84) Benannte Vertragsstaaten:
AT BE CH DE FR GB IT LI LU NL

(56) Entgegenhaltungen:
EP-A- 0 058 340
DE-A- 2 717 227
DE-A- 3 314 355
FR-A- 2 288 123

ADVANCED POLYMER SCIENCE, Band 72,
1985, Seiten 79-109; E.M. YORKGITIS et al.:
"Siloxane-modified epoxy resins"

(73) Patentinhaber: **hanse chemie GmbH**
**Charlottenburger Strasse 9**
**W-2054 Geesthacht(DE)**

(72) Erfinder: **Block, Hermann, Dipl.-Chem.**
**Dorfstrasse 23**
**W-2127 Echem(DE)**

(74) Vertreter: **Schulmeyer, Karl-Heinz, Dr.**
**Kieler Strasse 59a**
**W-2087 Hasloh(DE)**

## Beschreibung

Die Erfindung betrifft ein modifiziertes Reaktionsharz, ein Verfahren zu seiner Herstellung und seine Verwendung zur Herstellung gegebenenfalls geformter duroplastischer Kunststoffe mit verbesserter Bruchzähigkeit, insbesondere Schlagzähigkeit.

Im Sinne der vorliegenden Erfindung werden unter Reaktionsharzen Vorprodukte oder Prepolymere verstanden, die vor und während des Verarbeitungs- bzw. Formgebungsprozesses flüssig bzw. plastisch sind und nach der normaler weise formgebenden Verarbeitung durch Polyreaktion (Polymerisation, Polykondensation, Polyaddition) duroplastische Kunststoffe ergeben. Durch die Polyreaktion erhält man ein dreidimensional vernetztes, hartes, nicht schmelzbares Harz, den Duroplasten, der sich damit grundlegend von thermoplastischen Kunststoffen unterscheidet, die bekanntlich durch erneutes Erhitzen immer wieder verflüssigt bzw. plastifiziert werden können.

Infolge der meist sehr hohen Vernetzungsdichte weisen die vernetzten Reaktionsharze eine Reihe wertvoller Eigenschaften auf, die der Grund dafür sind, daß die neben den Thermoplasten zu den am meisten verwendeten Polymeren gehören. Zu diesen wertvollen Eigenschaften zählen insbesondere Härte, Festigkeit, Chemikalienresistenz und Temperaturbeständigkeit. Aufgrund dieser Eigenschaften werden diese Reaktionsharze auf den verschiedensten Gebieten angewendet, beispielsweise für die Herstellung von faserverstärkten Kunststoffen, für Isolierstoffe in der Elektrotechnik, zur Herstellung von Konstrucktionsklebstoffen, Schichtpreßstoffen, Einbrennlacken u.dgl.

Neben diesen vorteilhaften Eigenschaften weisen die Duroplaste einen gravierenden Nachteil auf, der in vielen Fällen einer Anwendung entgegensteht Als Folge des hochvernetzten Zustandes sind sie nämlich sehr spröde und haben eine geringe Schlagzähigkeit. Dies trifft insbesondere auf den Bereich tiefer Temperaturen, d.h. auf Temperaturen unter 0°C, zu, so daß man für Anwendungen, bei denen der polymere Stoff hohen mechanischen Belastungen, insbesondere Schlagbeanspruchungen, bei niedrigen Temperaturen ausgesetzt werden soll, normalerweise den thermoplastischen Polymeren den Vorzug gibt, wobei damit verbundene Nachteile, wie geringere Wärmeformbeständigkeit und Chemikalienresistenz, in Kauf genommen werden müssen.

Da dieser Zustand nicht zufriedenstellend ist, hat es in der Vergangenheit nicht an Versuchen gefehlt, die Schlagzähigkeit oder Flexibilität von Duroplasten zu verbessern.

So ist es z.B. bekannt, Reaktionsharzen faserige Füllstoffe beizumischen, um die Schlagzähigkeit zu erhöhen. Die damit erzielbaren Verbesserungen halten sich jedoch in engen Grenzen. Bekannt ist auch die Zugabe pulverförmiger, weicher Füllstoffe, wie Gummimehl oder weichelastische Kunststoffpulver, zu Reaktionsharzen. Die Teilchengröße derartiger pulverförmiger Zusätze liegt im Bereich von etwa 0,04 bis 1 mm, was offensichtlich nicht ausreicht, um solche Reaktionsharze in der gewünschten Weise zu verbessern, und was darüberhinaus mit Nachteilen für andere wichtige anwendungstechnische Eigenschaften derartig modifizierter Duroplaste verbunden ist.

Durch Zusatz von Weichmachern versuchte man, die Schlagzähigkeit von vernetzten Reaktionsharzen zu verbessern. Die zugesetzten Weichmacher reagieren nicht mit dem Reaktionsharz, sondern bewirken durch Einlagerung eine Aufweitung des Netzwerkes des Duroplasten und damit eine gewisse Materialerweichung. Dadurch kann in der Tat eine beträchtliche Verbesserung der Schlagzähigkeit erreicht werden, die aber leider auf Kosten einer Verschlechterung anderer wesentlicher Eigenschaften der Duroplaste erfolgt. Darüberhinaus steht bei der Verwendung von Weichmachern eine latente Gefahr des Auswanderns nach der Vernetzung des Reaktionsharzes oder bei längerer Alterung mit den damit verbundenen negativen Folgen für die Oberflächeneigenschaften des Materials, wie der Haftung, Überstreichbarkeit, dem Glanz u.dgl.

Ferner hat man bereits versucht, die Elastizität von Duroplasten dadurch zu erhöhen, daß man Kettenverlängerer zusetzt, die beim Härtungsprozeß in das Netzwerk eingebaut werden und die Vernetzungsdichte herabsetzen. Beispielsweise können Epoxidharze nach diesem Prinzip durch Zusatz von epoxidiertem Sojaöl, dimeren Fettsäuren oder epoxyfunktionellen Polyglykolethern elastifiziert werden. Da die Elastizitätsverbesserung aber durch eine Verringerung der Netzwerksdichte erreicht wird, ist damit zwangsläufig eine Verschlechterung aller mit der Vernetzungsdichte zusammenhängenden Eigenschaften verbunden, wie Härte, Chemikalienresistenz oder Temperaturbeständigkeit. Auch dieser Lösungsweg führte daher zu keinem voll befriedigenden Ergebnis.

Es ist auch bekannt, flüssige oder feste, jedoch unvernetzte Butadien-Acrylnitril-Kautschuke (Nitrilkautschuk, NBR) als zähigkeitsverbessernde Zusätze in Reaktionsharzen zu verwenden. Diese Nitrilkautschuke enthalten funktionelle Gruppen, die mit dem Reaktionsharz beim Vernetzungsprozeß oder auch in einer vorgelagerten Reaktion umgesetzt werden können. Die Besonderheit dieser Modifikatoren gegenüber den bisher genannten besteht darin, daß sie zwar mit dem unvernetzten Reaktionsharz mischbar sind, während der Vernetzung des Reaktionsharzes jedoch eine Phasentrennung stattfindet, bei der die Kautschukphase in Form feiner Tröpfchen ausfällt. Durch Umsetzung der an der Oberfläche der Nitrilkautschukteilchen befindlichen funktionellen Gruppen mit dem Reaktionsharz entsteht eine feste Verbindung der Kautschukphase mit der Duroplastmatrix.

Diese Art der Modifizierung von Reaktionsharzen ist zwar vorteilhafter, weil die Wirkung nicht durch einfache Herabsetzung der Netzwerksdichte, sondern durch Bildung einer separaten Weichphase erreicht wird mit der Folge, daß die weiteren vorteilhaften Eigenschaften des Duroplasten durch den Modifikator nicht in dem Maße beeinträchtigt werden, wie dies bei den vorher erwähnten Maßnahmen der Fall ist. Leider weisen aber auch derartige mit Nitrilkautschuk modifizierte Duroplaste wesentliche Mängel auf. So wird z.B. die thermische Beständigkeit von mit Nitrilkautschuk modifizierten Duroplasten verschlechtert und damit deren Verwendbarkeit bei hohen Temperaturen infrage gestellt. Das gleiche gilt für viele elektrische Eigenschaften, wie z.B. die Durchschlagfestigkeit. Aufgrund der relativ guten Verträglichkeit des Nitrilkautschuks mit den meisten Reaktionsharzen, insbesondere mit Epoxidharzen, nimmt ein gewisser Anteil des Kautschuks an der Phasentrennung beim Vernetzen nicht teil und wird in die Harzmatrix eingebaut. Dadurch wird die Vernetzungsdichte des vernetzten Reaktionsharzes herabgesetzt mit den bereits geschilderten negativen Folgen für das Eigenschaftsbild des fertigen Duroplasten. Ein weiterer Nachteil ist die sehr hohe Viskosität der Nitrilkautschuk-Modifikatoren, die zu Verarbeitungsproblemen führt und die Fließeigenschaften des modifizierten Reaktionsharzes beeinträchtigt.

Vorliegender Erfindung liegt die Aufgabe zugrunde, Reaktionsharze in der Weise zu modifizieren, daß nach dem Formgebungs- und Härtungsprozeß Duroplaste mit verbesserter Bruchzähigkeit, insbesondere Schlagzähigkeit, erhalten werden, wobei die den Duroplasten eigenen vorteilhaften Eigenschaften, insbesondere ihre Wärmeformbeständigkeit, Festigkeit und Chemikalienresistenz, auch bei den derart modifizierten Duroplasten praktisch vollständig erhalten bleiben sollen.

Diese Aufgabe wird erfindungsgemäß gelöst durch ein modifiziertes Reaktionsharz, enthaltend:

(a) 50 - 98 Gew.-% eines zu Duroplasten verarbeitbaren, bei Temperaturen im Bereich von 18 bis 100° C flüssigen Reaktionsharzes oder Reaktionsharzgemisches mit einem mittleren Molekulargewicht von 200 bis 500.000 und mit einer für den Härtungsprozeß ausreichenden Zahl geeigneter reaktiver Gruppen und

(b) 2 - 50 Gew.-% eines oder mehrerer dreidimensional vernetzter Polyorganosiloxankautschuke, die in dem Reaktionsharz oder Reaktionsharzgemisch in feinverteilter Form als Polyorganosiloxankautschuk-Teilchen mit einem Durchmesser von 0,01 bis 50 μm enthalten sind, wobei die Kautschukteilchen an ihrer Oberfläche reaktive Gruppen aufweisen, die, gegebenenfalls in Gegenwart von als Reaktionsvermittler dienenden Hilfsmitteln, vor oder bei der weiteren Verarbeitung des modifizierten Reaktionsharzes, z.B. während des formgebenden Verarbeitungs- und Härtungsprozesses, mit dem Reaktionsharz chemisch reagieren, gegebenenfalls zusammen mit geringen Mengen an Hilfsstoffen.

Vorzugsweise enthält das erfindungsgemäße modifizierte Reaktionsharz 5 bis 30 Gew.-% eines oder mehrerer dreidimensional vernetzter Polyorganosiloxankautschuke. Die gegebenenfalls in geringen Mengen vorliegenden Hilfsstoffe können insbesondere Vernetzungsmittel, Katalysatoren, Dispergiermittel und/oder Härtungsmittel sein.

Mit Polysiloxanen modifizierte Reaktionsharze, die sich jedoch von den erfindungsgemäß modifizierten Reaktionsharzen grundlegend unterscheiden, sind bereits bekannt. So werden in der DE-AS 11 78 540 in organischen Lösungsmitteln lösliche Mischkondensationsprodukte aus siliciumgebundene Hydroxylgruppen enthaltenden Organopolysiloxanen und nicht ölmodifizierten Polyestern beschrieben, die als wärmebeständige Einbrennlacke verwendbar sein sollen. In diesem Fall werden demnach homo- oder copolymere Siloxanharze und nicht, wie beim erfindungsgemäß modifizierten Reaktionsharz, Polyorganosiloxankautschuke angewendet. Auch die Zielsetzung ist eine andere, da für die Einbrennlacke nicht eine Verbesserung der Schlagzähigkeit, sondern die Verbesserung ihrer Beständigkeit bei höheren Temperaturen angestrebt wird. Weitere Beispiele, bei denen durch Zusatz von Siloxanharzen zu Reaktionsharzen andere Eigenschaften, z.B. die Alterungsbeständigkeit oder elektrische Eigenschaften, verbessert werden sollen, finden sich in der Monographie von W. Noll, "Chemie und Technologie der Silicone", Weinheim 1968, insbesondere Kapitel 7,4.

Aus DE-OS 27 17 227, DE-OS 32 05 993 und DE-OS 33 44 911 sind Polysiloxanmodifizierungen von thermoplastischen Vinylpolymerisaten, Polyestern, Polycarbonaten, Polyphenylensulfiden und einer Reihe weiterer thermoplastischer Materialien bekannt. Bei den hierbei verwendeten Polysiloxanen handelt es sich jedoch meist nicht um dreidimensional vernetzte Polyorganosiloxankautschuke, und außerdem sind die in den genannten Druckschriften beschriebenen Mischungen ausdrücklich auf thermoplastische Polymere beschränkt, betreffen also keine Reaktionsharze des in der vorliegenden Erfindung behandelten Typs.

Ferner werden in der DE-OS 29 00 185 siloxanmodifizierte Novolake beschrieben. Hierbei handelt es sich um lineare Polysiloxan-Novolak-Copolymere, die als solche gehärtet werden, ohne daß eine separate Phase aus feinverteiltem Polyorganosiloxankautschuk entsteht oder deren Entstehung nahegelegt würde.

Schließlich ist aus Adv. Polym. Sci. 72 (1985), Seiten 80 bis 108 bekannt, Epoxidharze mit Polyorganosiloxanen zu modifizieren, die beim Härtungsvorgang des Epoxidharzes in ähnlicher Weise, wie dies vorstehend bei den Nitrilkautschuk-Modifikatoren beschrieben wurde, in Form feinverteilter Tröpfchen koaleszieren. Es handelt sich hierbei um eine Emulsion von flüssigen, unvernetzten Polyorganosiloxanen in dem Reaktionsharz und nicht um feste, dreidimensional vernetzte Polyorganosiloxankautschuke, die sich in feiner Verteilung in dem Reaktionsharz befinden.

Keine der hier genannten Druckschriften zeigt demnach einen Weg auf, der zu den erfindungsgemäßen Produkten führt oder der die der Erfindung zugrundeliegende Aufgabe und ihre Lösung einem Fachmann nahelegen könnte.

Es wurde vielmehr überraschend gefunden, daß durch die erfindungsgemäß vorgeschlagene Zusammensetzung ein modifiziertes Reaktionsharz erhalten wird, das bei der anschließenden, an sich bekannten formgebenden Verarbeitung und Aushärtung einen duroplastischen Kunststoff ergibt, der gegenüber nicht oder nicht in der gleichen Weise modifizierten Duroplasten eine erheblich verbesserte Materialzähigkeit oder Bruchzähigkeit, insbesondere Schlagzähigkeit, aufweist, während die übrigen, für Duroplaste vorteilhaften Eigenschaften, wie Temperaturbeständigkeit, Festigkeit und Chemikalienresistenz, nicht oder nur unwesentlich beeinträchtigt werden.

Als Reaktionsharze sind erfindungsgemäß alle polymeren oder oligomeren organischen Verbindungen geeignet, die mit einer für eine Härtungsreaktion ausreichenden Zahl geeigneter reaktiver Gruppen versehen sind. Dabei ist es für den erfindungsgemäßen Zweck unerheblich, welcher Vernetzungs- oder Härtungsmechanismus im konkreten Fall abläuft. Daher sind als Ausgangsprodukte für die Herstellung der erfindungsgemäß modifizierten Reaktionsharze allgemein alle Reaktionsharze geeignet, die sich zu Duroplasten verarbeiten lassen, unabhängig vom jeweiligen Vernetzungsmechanismus, der bei der Härtung des jeweiligen Reaktionsharzes abläuft.

Grundsätzlich lassen sich die erfindungsgemäß als Ausgangsprodukte verwendbaren Reaktionsharze entsprechend der Art der Vernetzung durch Addition, Kondensation oder Polymerisation in drei Gruppen einteilen.

Aus der ersten Gruppe der durch Polyaddition vernetzten Reaktionsharze werden bevorzugt ein oder mehrere Epoxidharze, Urethanharze und/oder lufttrocknende Alkydharze als Ausgangsmaterial ausgewählt. Epoxid- und Urethanharze werden in der Regel durch Zusatz stöchiometrischer Mengen eines Hydroxyl-, Amino-, Carboxyl- oder Carbonsäureanhydridgruppen enthaltenden Härters vernetzt, wobei die Härtungsreaktion durch Addition der Oxiran-bzw. Isocyanatgruppen des Harzes an die entsprechenden Gruppen des Härters erfolgt. Bei Epoxidharzen ist auch die sog. katalytische Härtung durch Polyaddition der Oxirangruppen selbst möglich. Lufttrocknende Alkydharze vernetzen durch Autoxidation mit Luftsauerstoff.

Beispiele für die zweite Gruppe der durch Polykondensation vernetzten Reaktionsharze sind Kondensationsprodukte von Aldehyden, z.B. Formaldehyd, mit amingruppenhaltigen aliphatischen oder aromatischen Verbindungen, z.B. Harnstoff oder Melamin, oder mit aromatischen Verbindungen wie Phenol, Resorcin, Kresol, Xylol usw., ferner Furanharze, gesättigte Polyesterharze und Silikonharze. Die Härtung erfolgt hierbei meist durch Temperaturerhöhung unter Abspaltung von Wasser, niedermolekularen Alkoholen oder anderen niedermolekularen Verbindungen. Bevorzugt werden als Ausgangsmaterial für die erfindungsgemäß modifizierten Reaktionsharze ein oder mehrere Phenol-Harze, Resorcin-Harze und/oder Kresol-Harze, und zwar sowohl Resole als auch Novolake, ferner HarnstoffFormaldehyd- und Melamin-Formaldehyd-Vorkondensate, Furanharze sowie gesättigte Polyesterharze und/oder Silikonharze ausgewählt.

Aus der dritten Gruppe der durch Polymerisation vernetzten Reaktionsharze sind ein oder mehrere Homo- oder Copolymerisate der Acrylsäure und/oder Methacrylsäure oder ihrer Ester, ferner ungesättigte Polyesterharze, Vinylesterharze und/oder Maleinimidharze als Ausgangsharze für die erfindungsgemäß modifizierten Reaktionsharze bevorzugt. Diese Harze weisen polymerisationsfähige Doppelbindungen auf, durch deren Polymerisation oder Copolymerisation die dreidimensionale Vernetzung bewirkt wird. Als Starter dienen zur Bildung freier Radikale befähigte Verbindungen, z.B. Peroxide, Peroxoverbindungen oder Azogruppen enthaltende Verbindungen. Auch eine Initiierung der Vernetzungsreaktion durch energiereiche Strahlung, wie UV- oder Elektronenstrahlung, ist möglich.

Nicht nur die vorstehend genannten Reaktionsharze, sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im wesentlichen unbeeinflußt erhalten bleiben. Hierbei sind die erfindungsgemäß eingesetzten Reaktionsharze oder Reaktionsharzgemische bei Temperaturen im Bereich von 18 bis 100°C flüssig. Ferner weisen die eingesetzten Reaktionsharze oder Reaktionsharzgemische ein mittleres Molekulargewicht im Bereich von 200 bis 500.000, vorzugsweise von 300 bis 20.000 auf.

Bei der Auswahl geeigneter Polyorganosiloxankautschuke für den erfindungsgemäßen Zweck ist wesentlich, daß es sich hierbei um dreidimensional vernetzte Kautschuke mit ausreichend guter Elastizität handelt, die mit einem Teilchendurchmesser von 0,01 bis 50 $\mu$m, bevorzugt mit einem Teilchendurchmesser im Bereich von 0,05 bis 20 $\mu$m und besonders bevorzugt von 0,1 bis 5 $\mu$m, in dem flüssigen Reaktionsharz verteilt sind und die an der Oberfläche der Teilchen reaktive Gruppen aufweisen, über die sie an das Reaktionsharz chemisch gebunden werden können. Polyorganosiloyane, die diese Bedingungen erfüllen und nach der Vernetzung kautschukelastische Polymere bilden, sind allgemein für den erfindungsgemäßen Zweck geeignet.

Unter der Vielzahl von verschiedenen dreidimensional vernetzten Polyorganosiloxankautschuken werden solche bevorzugt angewendet, die sich von Siloxaneinheiten der allgemeinen Formel

$$-(R_2SiO)- \quad (1)$$

ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyloder Alkylphenylgruppen mit 1 bis 12 C-Atomen im aliphatischen Rest, wobei die Kohlenwasserstoffreste auch durch Halogene oder Hydroxyl , Carboxyl-, Carbonsäureanhydrid-, Amino-, Epoxy-, Alkoxy- oder Alkenyloxygruppen substituiert sein können, ferner Polyether- oder Polyolefingruppen sowie Wasserstoff darstellen, wobei die Gruppen direkt oder über ein Sauerstoff- oder Stickstoffatom mit einem Siliciumatom der Polysiloxankette verbunden sind.

Beispiele für solche Reste R sind Methyl-, Ethyl-, Isopropyl-, Isobutyl , Dodecyl- und Octadecylgruppen, Cyclopentyl-, Cyclohexyl- und Cyclooctylgruppen; Vinyl-, Allyl-, Isopropenyl und 3-Butenylgruppen, Ethylphenyl-, Dodecylgruppen, ferner Gruppen mit Kohlenwasserstoffresten, die zum Teil substituiert sind, beispielsweise durch Halogene, wie Fluor oder Chlor, wie z.B. beim Chlorpropyl oder beim 1,1,1-Trifluorpropylrest. Zumindest ein Teil der Reste R kann auch aus polymeren Gruppen bestehen, wobei hier insbesondere Polyether, wie Polyethylen-, Polypropylen-, Polybutylen oder Polyhexamethylenglykol oder Polytetrahydrofuran sowie Mischpolymere aus diesen Ethern, ferner Polyolefine, z.B. Polybutadien, Polyisopren, Polybuten, Polyisobuten u.dgl., infrage kommen. Schließlich kann ein Teil der Reste R auch wasserstoff sein.

Selbstverständlich ist es auch möglich, Mischungen der vorgenannten Polyorganosiloxane zu verwenden.

Ferner ist es auch ohne weiteres möglich, erfindungsgemäß solche Polyorganosiloxane einzusetzen, bei denen verschiedene Reste R im Polymermolekül vorhanden sind. Diese verschiedenen Reste können sich entlang der Siloxanhauptkette statistisch verteilen. In einer bevorzugten Ausführungsform ist der erfindungsgemäß angewandte Polyorganosiloxankautschuk ein Blockcopolymeres, bei dem einwertige Reste R' und R'' entlang der Siloxanhauptkette in Blöcken angeordnet sind,die sich von Polymereinheiten der allgemeinen Formel

$$-(R'_2SiO)_x-(R''_2SiO)_y- \quad (2)$$

ableiten, wobei die Reste R' und R'', die die gleiche Bedeutung wie R haben, voneinander verschieden sind, während die Reste R' bzw. R'' unter sich gleich oder verschieden sein können, und x und y gleich 1 oder ganzzahlige Vielfache davon sind.

Wegen der leichten Verfügbarkeit bei gleichzeitig guter Wirkung sind solche Polyorganosiloxane bevorzugt, bei denen mindestens 50% der Reste R, R' bzw. R'' Methyl- und/oder Phenylgruppen darstellen.

Die Erfindung betrifft ferner ein Verfahren zur Herstellung von modifizierten Reaktionsharzen, das dadurch gekennzeichnet ist, daß

(a) eine Dispersion von 2 bis 50 Gew.-%, vorzugsweise von 5 bis 30 Gew.-%, eines oder mehrerer dreidimensional vernetzbarer, flüssiger Polyorganosiloxane mit einem mittleren Molekulargewicht von 800 bis 500.000, die in den zu modifizierenden Reaktionsharzen nicht oder nur wenig löslich sind, gegebenenfalls zusammen mit geringen Mengen an Hilfsstoffeninsbesondere an Vernetzungsmitteln, Katalysatoren, Dispergiermitteln und/oder Härtungsmitteln, in 50 bis 98 Gew.-% eines zu Duroplasten verarbeitbaren, bei Temperaturen von 18 bis 120 °C flüssigen Reaktionsharzes oder Reaktionsharzgemisches mit einem mittleren Molekulargewicht von 200 bis 500.000 hergestellt wird, in der die Polyorganosiloxantröpfchen mit einem Durchmesser im Bereich von 0,01 bis 50 $\mu$m vorliegen, und

(b) eine dreidimensionale Vernetzung in den Polysiloxantröpfchen zu Polyorganosiloxankautschuk-Teilchen mit an ihrer Oberfläche gegenüber dem Reaktionsharz chemisch reaktiven Gruppen und mit einem Durchmesser von 0,01 bis 50 μm durchgeführt wird, wobei die Reaktionsbedingungen so ausgewählt werden, daß keine oder nur eine unwesentliche Härtungsreaktion im Reaktionsharz selbst stattfindet.

Vorzugsweise wird in Stufe (a) eine Dispersion unter Verwendung eines bei Temperaturen von 20 bis 100 °C flüssigen Reaktionsharzes oder Reaktionsharzgemisches hergestellt.

Ferner werden in einer bevorzugten Ausführungsform in Verfahrensstufe (a) 5 bis 30 Gew.-% eines oder mehrerer dreidimensional vernetzbarer, flüssiger Polyorganosiloxane eingesetzt.

Aus Gründen einer besseren Handhabbarkeit und leichteren Verfügbarkeit werden in Stufe (a) vorzugsweise solche unvernetzten Polyorganosiloxane oder Polyorganosiloxangemische eingesetzt, die ein mittleres Molekulargewicht von 1.000 bis 100.000, besonders bevorzugt von 1.200 bis 30.000, aufweisen.

Durch das erfindungsgemäße Verfahren werden die eingesetzten unvernetzten flüssigen Polysiloxane in den Reaktionsharzen so fein verteilt, daß die Polysiloxane als Tröpfchen mit einem Durchmesser im Bereich von 0,01 bis 50 μm, vorzugsweise von 0,05 bis 20 μm und besonders bevorzugt von 0,1 bis 5 μm, in der Reaktionsharzmatrix vorliegen.

Das erfindungsgemäße Verfahren kann in einer bevorzugten Ausführungsform mit der Abänderung durchgeführt werden, daß die flüssigen Polyorganosiloxane zunächst in einem nicht oder nur wenig mit den Polyorganosiloxanen mischbaren Medium dispergiert und anschließend in an sich bekannter Weise vernetzt werden, bevor sie mit dem zu modifizierenden Reaktionsharz oder Reaktionsharzgemisch vermischt werden, wobei gegebenenfalls nach dem Vermischen das Dispergiermedium in geeigneter Weise entfernt wird. Vorzugsweise wird als Dispergiermedium Wasser eingesetzt.

Bei dieser Ausführungsform des erfindungsgemäßen Verfahrens wird demnach zunächst eine Dispersion der unvernetzten, flüssigen Polyorganosiloxane in einem speziellen Dispergiermedium hergestellt, dann die Vernetzung in den Polyorganosiloxantröpfchen, z.B. durch geeignete Temperaturerhöhung, bewirkt, wobei die gebildeten vernetzten Polyorganosiloxankautschuk-Teilchen in dem Dispergiermedium in der gewünschten Weise dispergiert bleiben. In einem weiteren Verfahrensschritt wird diese Dispersion mit dem zu modifizierenden Reaktionsharz vermischt, wobei auf die Erhaltung der feinen Verteilung geachtet werden muß. Wenn das Dispergiermedium in der modifizierten Reaktionsharzmischung unerwünscht ist, kann es z.B. durch Verdampfen oder Dekantieren abgetrennt werden.

In einer anderen, besonders bevorzugten Ausführungsform des erfindungsgemäßen Verfahrens werden die unvernetzten flüssigen Polyorganosiloxane in einem Verfahrensschritt direkt in dem flüssigen Reaktionsharz oder Reaktionsharzgemisch dispergiert und vernetzt.

Diese besonders einfach durchzuführenden Ausführungsformen des erfindungsgemäßen Verfahrens sind zwar prinzipiell für sämtliche vorstehend beschriebenen Polyorganosiloxane geeignet. Die Ergebnisse sind aber besonders günstig, wenn die eingesetzten unvernetzten, flüssigen Polyorganosiloxane in dem Reaktionsharz bzw. Reaktionsharzgemisch nicht oder nur wenig löslich sind. Diese Voraussetzung ist bei praktisch allen Reaktionsharzen gegeben, wenn zumindest ein größerer Teil, vorzugsweise mehr als 50%, aller Organogruppen der Siloxanhauptkette Methylgruppen sind, weshalb solche Polyorganosiloxane für diese Varianten des erfindungsgemäßen Verfahrens bevorzugt eingesetzt werden.

Die feine Verteilung der flüssigen Polyorganosiloxane in den flüssigen Reaktionsharzen kann mit allen für die Herstellung von Emulsionen bekannten Maßnahmen und Hilfsmitteln bewirkt werden. Hierzu zählen insbesondere mechanische Aggregate, die eine hinreichend hohe Scherwirkung in dem zu dispergierenden Medium entfalten, wie z.B. Rührer, Dissolver, Kneter, Walzenstühle, Hochdruckhomogenisatoren, Ultraschallhomogenisatoren u. dgl. Besonders geeignet zur Erzielung einer feinen Verteilung sind Dispergiergeräte vom Typ "Ultra-Turrax". Es versteht sich, daß die zur Erzielung einer bestimmten Verteilung aufzubringenden Scherkräfte von den Viskositäten des Polysiloxans und des Reaktionsharzes bzw. Reaktionsharzgemisches abhängig sind. Bei sehr hohen Viskositäten, insbesondere des Reaktionsharzes, müssen daher unter Umständen so hohe Scherkräfte aufgebracht werden, daß entweder entsprechend starke Dispergiermaschinen eingesetzt werden oder aber Viskositätserniedrigungen durch entsprechende Temperaturerhöhung bewirkt werden müssen. Dies gilt insbesondere für Reaktionsharze, die bei Raumtemperatur fest sind und durch Temperaturerhöhung erst in einen plastischen bzw. flüssigen Zustand gebracht werden müssen. Die angewandten erhöhten Temperaturen dürfen jedoch nicht dazu führen, daß eine merkliche Vernetzung der Polyorganosiloxane bzw. der Reaktionsharze während der Dispergierphase auftritt. Dies läßt sich in an sich bekannter Weise durch geeignete Wahl der Vernetzungssysteme kontrollieren.

Um beim Dispergieren der Polyorganosiloxane die gewünschten Teilchengrößen zu erreichen und/oder die erhaltene Polyorganosiloxandispersion zu stabilisieren, kann es erforderlich oder wünschenswert sein, bestimmte dispergierend wirkende Zusätze einzusetzen. In den Fällen, in denen die Siloxankomponente durch geeignete Wahl eines Teils der Reste R, R' oder R" selbst eine hinreichende Dispergierfähigkeit aufweist, wobei diese Reste zweckmäßigerweise eine chemische Konstitution besitzen, die mit dem

6

jeweiligen Reaktionsharz gut verträglich ist, erübrigen sich Dispergiermittelzusätze. In allen anderen Fällen aber, in denen derartige substituierte Polysiloxane entweder nicht verfügbar oder nur aufwendig herzustellen sind, kann die Verwendung eines separaten Dispergiermittels erforderlich sein. Vorzugsweise werden daher in Stufe (a) als Dispergiermittel Verbindungen mit amphiphiler Struktur eingesetzt, wobei ein Teil der Gruppen solcher amphiphiler Moleküle so ausgewählt ist, daß er mit den eingesetzten Polyorganosiloxanen verträglich ist, während ein anderer Teil der Gruppen so ausgewählt ist, daß er mit dem Reaktionsharz bzw. Reaktionsharzgemisch verträglich ist.

Die geeigneten Dispergiermittel besitzen demnach eine bestimmten Emulgatoren analoge amphiphile Struktur. Besonders bewährt und daher bevorzugt werden als Dispergiermittel Copolymere mit einem Polyorganosiloxanteil und einem kohlenstofforganischen Teil, der mit dem Reaktionsharz bzw. Reaktionsharzgemisch verträglich ist, eingesetzt. Ist beispielsweise das Reaktionsharz ein Epoxidharz, dann ist ein Copolymeres aus Polydimethylsiloxan und Epoxidharz ein geeignetes Dispergiermittel. Die Herstellung derartiger Copolymere ist im Prinzip bekannt und z.B. in W. Noll, "Chemie und Technologie der Silikone", Weinheim 1968, ausführlich beschrieben.

Die für den erfindungsgemäßen Zweck geeigneten Dispergiermittel sind bezüglich ihres Molekulargewichts unkritisch, d.h. das Molekulargewicht kann in weiten Grenzen variieren. Vorzugsweise werden Dispergiermittel eingesetzt, die ein mittleres Molekulargewicht von 300 bis 50.000 aufweisen. Wesentlich ist in jedem Falle, daß das gewählte Dispergiermittel sich unter den Bedingungen des Dispergiervorganges tatsächlich an der Phasengrenzfläche zwischen Polyorganosiloxan und Reaktionsharz befindet.

Die erforderliche Konzentration an Dispergiermittel hängt weitgehend von seiner Wirksamkeit, der chemischen Konstitution der Polysiloxane und Reaktionsharze und den Dispergierbedingungen ab. In der Praxis werden mit Konzentrationen von 1 bis 30%, bezogen auf den Polysiloxananteil, gute Wirkungen erzielt.

Das mittlere Molekulargewicht der im erfindungsgemäßen Verfahren verwendbaren flüssigen, unvernetzten Polyorganosiloxane kann in weiten Grenzen variieren und liegt im allgemeinen im Bereich von 800 bis 500.000. Die untere Grenze wird dadurch bestimmt, daß mit abnehmendem Molekulargewicht die Vernetzungsdichte des Polyorganosiloxankautschuks größer wird und dadurch dessen Elastizität abnimmt. Dieser Effekt kann allerdings durch Zusatz bifunktioneller Vernetzungsmittel in gewissen Grenzen abgeschwächt werden. Die obere Grenze ist durch die mit steigendem Molekulargewicht zunehmende Viskosität der Polyorganosiloxane gegeben, die die erwünschte feine Verteilung der Siloxane in den flüssigen Reaktionsharzen erschwert. In einer bevorzugten Ausführungsform des erfindungsgemäßen Verfahrens weist das in Verfahrensstufe (a) eingesetzte unvernetzte Polyorganosiloxan oder Polyorganosiloxangemisch vorzugsweise ein mittleres Molekulargewicht im Bereich von 1.000 bis 100.000, besonders bevorzugt von 1.200 bis 30.000, auf. Hierbei ist natürlich zu berücksichtigen, daß die Polyorganosiloxane ebenso wie die meisten anderen Polymeren keine einheitlichen Molekulargewichte, sondern eine mehr oder weniger breite Molekulargewichtsverteilung haben.

Auch die Art der Vernetzung, durch die die flüssigen Polyorganosiloxane zu elastischen Silikonkautschukpartikeln umgewandelt werden, ist für das Wesen der Erfindung ohne Belang, solange gewährleistet ist, daß durch die Vernetzungsreaktion die feine Verteilung der Polysiloxanteilchen nicht wesentlich gestört wird und daß in der Reaktionsharzphase keine oder nur unwesentliche Vernetzungsreaktionen stattfinden. Sofern diese Voraussetzungen erfüllt sind, können alle üblicherweise zur Vernetzung von Polysiloxanelastomeren verwendeten Härtungsverfahren angewendet werden, insbesondere die bekannten Additions- und Kondensationsverfahren.

Für die Durchführung der Additionsvernetzung müssen in der Polyorganosiloxanmischung in ausreichender Zahl Gruppen vorhanden sein, die direkt an Silicium gebundenen Wasserstoff aufweisen, also SiH-Gruppen, sowie olefinisch ungesättigte Reste, die an die SiH-Gruppen addiert werden können (sog. Hydrosilylierungsreaktion). Im einfachsten Fall handelt es sich bei dem vernetzbaren Polyorganosiloxan um ein Polydimethylsiloxan mit Vinylendgruppen, dem 1 bis 10% eines Polymethylhydrogensiloxans als Vernetzer zugesetzt sind. Die Additionsvernetzung findet meist bei erhöhten Temperaturen, z.B. zwischen 60 und 140°C, in Gegenwart eines Edelmetallkatalysators statt. Hierfür werden normalerweise Verbindungen der Elemente der Platingruppe des Periodischen Systems verwendet, z.B. Platin, Palladium oder Rhodium. Ein häufig verwendeter Katalysator ist z.B. Hexachlorplatinsäure, gelöst in geeigneten Lösungsmitteln, z.B. in Glykolether oder Isopropanol. Geeignete Katalysatoren sind auch die Umsetzungsprodukte von Edelmetallchloriden mit Vinylgruppen enthaltenden organischen oder siliciumorganischen Verbindungen oder die Edelmetalle selbst in feinster Verteilung auf geeigneten Trägern wie Aktivkohle oder Aluminiumoxid.

Kondensationsvernetzende Siloxane weisen direkt an Silicium gebundene leicht abspaltbare Reste auf, z.B. Hydroxyl-, Alkoxy-, Acyloxy-, Ketoximino-, Amin-, Aminoxy- oder Alkylamidgruppen oder Wasserstoff.

7

EP 0 266 513 B1

Diese abspaltbaren Reste können in den Polyorganosiloxanen selbst angeordnet sein und/oder in speziell als Vernetzer zugesetzten Silanen. Häufig verwendete kondensationsvernetzende Polysiloxanelastomere bestehen aus Polydimethylsiloxanen mit Hydroxylendgruppen und als Vernetzer zugesetzten Tri- oder Tetraorganooxysilanen, wie Methyltriacetoxysilan, Tetraethoxysilan, Methyltris(methylethylketoximino)silan oder Polymethylhydrogensiloxan. Die Verwendung von Kondensationskatalysatoren ist hierbei nicht unbedingt erforderlich, kann aber dann empfehlenswert sein, wenn die Dauer der Vernetzungsreaktion verkürzt oder die für die Vernetzung erforderliche Temperatur erniedrigt werden soll. Als geeignete Katalysatoren kommen in erster Linie organische Schwermetallsalze infrage, wie z.B. die bekannten Octoate, Laurate, Naphthenate oder Acetate von Zinn, Zirkonium, Blei und Titan.

Diese für die Herstellung von Siloxanelastomeren bekannten Vernetzungsmethoden lassen sich durch solche Verknüpfungsreaktionen erweitern, die die dreidimensionale Vernetzung der linearen Polyorganosiloxanmoleküle bewirken können. Die für solche Verknüpfungsreaktionen erforderlichen reaktiven Gruppen können nicht nur, wie für die bekannten Fälle der Additions- und Kondensationsvernetzung vorstehend beschrieben wurde, direkt an der Polysiloxanhauptkette sitzen, sondern auch mit den organischen Resten R, R' oder R'' der oben angegebenen Formeln (1) und (2) verbunden sein bzw. mit den weiter oben beschriebenen funktionellen Gruppen, mit denen diese Reste substituiert sein können, identisch sein. Beispiele hierfür sind die Verknüpfungsreaktionen zwischen epoxyfunktionellen Resten einerseits und amin-, carboxy- oder carbonsäureanhydridfunktionellen Resten andererseits.

Es soll hier nochmals betont werden, daß zur Erreichung des erfindungsgemäßen Zwecks nicht die Art der Verknüpfung an sich entscheidend ist, sondern daß jede Art der Verknüpfung geeignet ist, bei der im wesentlichen nur dreidimensional vernetzte Polyorganosiloxane gebildet werden, deren Vernetzungsdichte einerseits niedrig genug ist, um dem Vernetzungsprodukt elastomere und nicht harzartige Eigenschaften zu verleihen, andererseits aber ausreichend hoch genug ist, damit das Vernetzungsprodukt ein Mindestmaß an kautschukelastischen Eigenschaften aufweist.

Die durchschnittliche Teilchengröße der Polyorganosiloxankautschukteilchen und deren Größenverteilung üben einen Einfluß auf die wesentlichen Eigenschaften des ausgehärteten modifizierten Reaktionsharzes aus, insbesondere auf dessen Bruch und Schlagzähigkeit. Es ist daher wesentlich zur Erreichung des erfindungsgemäß angestrebten Erfolgs, daß die Teilchengrößen in dem vorgegebenen Größenbereich liegen, wobei eine bessere Wirkung erhalten wird, wenn statt einer sehr schmalen ("unimodalen") eine breite Verteilung der Teilchengrößen, z.B. über den gesamten besonders bevorzugten Bereich von 0,1 bis 5 µm, vorliegt Die Teilchengrößenverteilung kann beispielsweise durch eine kontinuierliche Durchmesserverteilungskurve in der Art einer Gaußschen Verteilungskurve charakterisiert sein, sie kann aber auch aus zwei oder drei Größenklassen mit jeweils engerer Größenverteilung ("bi- oder trimodal") zusammengesetzt sein.

Die gewünschte Teilchengrößenverteilung der vernetzten Polyorganosiloxankautschuk-Teilchen, die sich in der Reaktionsharzmatrix befinden, kann bereits während des Dispergiervorganges bei der Bildung der unvernetzten Polyorganosiloxantröpfchen durch die Auswahl der Scherkräfte und gegebenenfalls des Dispergiermittels vorbestimmt und in weiten Grenzen gesteuert werden, was dem auf dem Gebiet der Dispersionsherstellung bewanderten Fachmann geläufig ist. Natürlich sollte darauf geachtet werden, daß die beim Dispergieren erhaltene Teilchengrößenverteilung bei den nachfolgenden Verfahrensschritten, insbesondere beim Vernetzen der Polyorganosiloxane und beim Härten der Reaktionsharze, im wesentlichen unverändert bleibt. Es ist aber auch möglich und beeinträchtigt den erfindungsgemäß angestrebten Erfolg kaum, wenn ein Teil der beim Dispergieren gebildeten Teilchen in den darauffolgenden Verfahrensschritten koaguliert bzw. agglomeriert, d.h. sich zu Partikeln mit größerem Durchmesser verbindet. Dadurch entstehen normalerweise Teilchen unterschiedlicher Größenklassen, wodurch es beispielsweise zu der vorstehend erwähnten bi- oder trimodalen Größenverteilung kommen kann.

Wie bereits oben erwähnt, ist es zur Erreichung einer verbesserten Bruch- und Schlagzähigkeit bei den erfindungsgemäßen ausgehärteten modifizierten Reaktionsharzen wesentlich, daß die feinverteilten Polysiloxankautschukteilchen eine chemische Bindung mit dem Reaktionsharz eingehen. Die Bindung wird durch eine chemische Reaktion zwischen an der Oberfläche der Kautschukteilchen befindlichen reaktiven Gruppen und entsprechenden im Reaktionsharz vorhandenen reaktiven Gruppen bewirkt, wobei die an der Oberfläche der Polysiloxanteilchen befindlichen reaktiven Gruppen selbstverständlich auf die reaktiven Gruppen des jeweiligen Reaktionsharzes abgestimmt sein müssen. Wenn das Reaktionsharz ein nach dem Polymerisationsprinzip härtendes Harz ist, z.B. ein ungesättigtes Polyesterharz, wird man als reaktive Gruppen im Polyorganosiloxankautschuk zweckmäßigerweise polymerisationsfähige $C=C$-Doppelbindungen wählen. Bei einem additionsvernetzenden Harz, z.B. einem Epoxidharz, können die reaktiven Gruppen des Polysiloxanteilchens ebenfalls Epoxidgruppen sein, die dann beim Härtungsprozeß des Reaktionsharzes mit dem jeweils verwendeten Härter reagieren, oder aber epoxyreaktive Gruppen, wie die bereits erwähnten Amino-, Carboxy- oder Carbonsäureanhydrid-Gruppen. Bei kondensationsvernetzenden Harzen, z.B. Phenolharzen,

8

können die reaktiven Gruppen beispielsweise phenolische OH-Gruppen sein.

In einer bevorzugten Weiterbildung des die Verfahrensstufen (a) und (b) umfassenden Verfahrens wird in einer weiteren Verfahrensstufe (c) eine chemische Umsetzung zwischen den Polyorganosiloxanteilchen und dem Reaktionsharz oder Reaktionsharzgemisch durchgeführt, durch die eine chemische Bindung zwischen den Polyorganosiloxanteilchen und dem Reaktionsharz bzw. dem Reaktionsharzgemisch bewirkt wird. Die chemische Umsetzung in Stufe (c) erfolgt vorteilhaft vor oder bei der weiteren Verarbeitung des modifizierten Reaktionsharzes.

Damit die Polyorganosiloxankautschukteilchen mit dem Reaktionsharz chemisch reagieren können, müssen sich die reaktiven Gruppen an der Oberfläche der Polyorganosiloxankautschukteilchen befinden. Das kann beispielsweise dadurch realisiert werden, daß die im Polyorganosiloxan enthaltenen Reste R, R' oder R" entsprechend reaktive Substituenten tragen, wie bereits vorstehend beispielhaft ausgeführt wurde. Voraussetzung hierfür ist, daß diese Substituenten die Vernetzungsreaktion der Polyorganosiloxane nicht in unerwünschter Weise beeinflussen. Eine weitere Möglichkeit besteht in der entsprechenden, zumindest teilweisen Substituierung der gegebenenfalls beim Dispergierungsvorgang der Polyorganosiloxane verwendeten Dispergiermittel mit den gewünschten bzw. erforderlichen reaktiven Gruppen. Mit der bevorzugten Weiterbildung des erfindungsgemäßen Verfahrens läßt sich dies besonders einfach dadurch realisieren, daß bei der Auswahl eines geeigneten amphiphil aufgebauten Dispergiermittels darauf geachtet wird, daß dessen kohlenstofforganischer Bestandteil geeignete reaktive Gruppen aufweist. In einer besonders bevorzugten Ausgestaltung des Verfahrens wird daher in Stufe (a) ein amphiphiles Dispergiermittel mit einem kohlenstofforganischen Teil eingesetzt, der reaktive Gruppen aufweist, die in Verfahrensstufe (c) als Reaktionsvermittler chemische Bindungen zwischen den Polyorganosiloxanteilchen und dem Reaktionsharz bzw. Reaktionsharzgemisch bewirken.

Eine weitere Möglichkeit ergibt sich durch den Einsatz von als Reaktionsvermittler dienenden Zusätzen in der Stufe (c) des erfindungsgemäßen Verfahrens. Um die angestrebte chemische Verankerung der Silikonkautschukteilchen an die Harzmatrix zu gewährleisten, muß ein solcher Reaktionsvermittler zusätzlich auch chemische Gruppierungen aufweisen, die ihn an die Silikonkautschukteilchen binden. Als solche Reaktionsvermittler zwischen Polyorganosiloxankautschukteilchen und Reaktionsharz werden erfindungsgemäß in der Verfahrensstufe (c) vorzugsweise Organoalkyloxysilane und/oder Organo-Silikon-Copolymere mit an die Polyorganosiloxane und Reaktionsharze angepaßten reaktiven Gruppen eingesetzt. Geeignete Organoalkyloxysilane sind z.B. Vinyltrimethoxysilan, Glycidyloxypropyltrimethoxysilan, Aminopropyltriethoxysilan, Methacryloyloxypropyltrimethoxysilan u. dgl. Organo-Silikon-Copolymere, die für diesen Zweck geeignet sind, können im Prinzip ähnlich aufgebaut sein wie die vorstehend beschriebenen Dispergiermittel, so daß sich eine eingehendere Beschreibung erübrigt. Beispiele für geeignete Organo-Silikon-Copolymere sind Kondensationsprodukte aus niedrigmolekularen silanolterminierten Polydimethylsiloxanen mit Diglycidylethern, Hydroxycarbonsäuren bzw. hydroxyl- und carbonsäuregruppenhaltigen Polyestern, aromatischen Polyhydroxyverbindungen usw. Weitere Möglichkeiten ergeben sich durch die Hydrosilylierung von Polymethylhydrogensiloxanen mit Verbindungen, die zusätzlich zur gewünschten reaktiven Gruppe noch eine olefinische Doppelbindung aufweisen, wie Allylglycidylether, Allylalkohol, Methacrylsäureallylester, 2-Hydroxyethylacrylat, Maleinsäureanhydrid u. dgl. Die Herstellung dieser Copolymeren ist im Prinzip bekannt und dem Fachmann geläufig.

In einer weiteren bevorzugten Ausführungsform wird die chemische Umsetzung in Stufe (c) der Weiterbildung des erfindungsgemäßen Verfahrens zusammen mit dem Dispergieren und Vernetzen der flüssigen Polyorganosiloxane in dem Reaktionsharz oder Reaktionsharzgemisch in einem Verfahrensschritt durchgeführt.

Die Reaktion, mit der die Polyorganosiloxankautschukteilchen an die Reaktionsharzmatrix chemisch gebunden werden sollen, wird zweckmäßigerweise vor oder bei der weiteren Verarbeitung des modifizierten Reaktionsharzes durchgeführt, wobei Art und Bedingungen der Durchführung weitgehend von der Art der beteiligten Reaktionspartner abhängen. Im einfachsten Falle genügt eine entsprechende Temperaturerhöhung, um die gewünschte Reaktion zu bewirken. Eine andere Möglichkeit besteht in der Zugabe einer zur Reaktion mit den reaktiven Gruppen der Polysiloxanteilchen befähigten Komponente, z.B. der oben erwähnten Reaktionsvermittler, oder diese Reaktion katalysierenden Komponente in das Reaktionsharz. Hierbei kann die zuzugebende Reaktionskomponente bzw. die katalytisch wirkende Komponente identisch sein mit den entsprechenden Komponenten, die die Härtungsreaktion des Reaktionsharzes bewirken. In diesem Falle wird die chemische Bindungsreaktion vorzugsweise erst dann durchgeführt, wenn das Reaktionsharz nach dem Formgebungsprozeß gehärtet werden soll, gegebenenfalls gleichzeitig mit dieser Härtung.

Die modifizierten Reaktionsharze gemäß vorliegender Erfindung weisen eine Reihe von Vorteilen gegenüber vergleichbaren bekannten Produkten auf und können daher auf zahlreichen Gebieten vorteilhaft

9

eingesetzt werden. Zu diesen Vorteilen gehören in erster Linie die Verbesserung der Bruch- und Schlagzähigkeit von duroplastischen Kunststoffen, und zwar sowohl bei sehr tiefen Temperaturen - je nach verwendetem Polyorganosiloxan bis zu -50° C - als auch bei sehr hohen Temperaturen, d.h. bis zur Erweichungstemperatur des jeweiligen Duroplasten. Wichtig ist ferner, daß durch die Modifizierung kein negativer Einfluß auf Härte, Festigkeit und Erweichungstemperatur des vernetzten Reaktionsharzes ausgeübt wird. Durch die Elastomerkomponente besitzt das erfindungsgemäße ausgehärtete Reaktionsharz eine hohe Alterungs-, Witterungs-, Licht- und Temperaturbeständigkeit, ohne daß dadurch die charakteristischen Eigenschaften des Duroplasten selbst beeinträchtigt werden. Auch die elektrischen Eigenschaften, insbesondere die Isolatoreigenschaften des Reaktionsharzes, werden vor allem bei höheren Temperaturen nicht beeinträchtigt.

Die Verarbeitung der erfindungsgemäßen schlagzäh modifizierten Reaktionsharze kann in herkömmlicher Art und Weise erfolgen, wobei es besonders vorteilhaft ist, daß die Viskosität der unvernetzten modifizierten Reaktionsharze bei den bevorzugt angewendeten Kautschukkonzentrationen von 5 bis 20 Gew.-%, bezogen auf das modifizierte gehärtete Harz, kaum höher ist als die der unmodifizierten Harze. Es findet auch normalerweise keine negative Beeinflussung der Härtungsreaktion durch die Anwesenheit der Polysiloxanteilchen statt, was eine wesentliche Erleichterung bei der Rezeptur- und Verfahrensausarbeitung ist. Aufgrund des nur geringen Einflusses der erfindungsgemäß vorgeschlagenen Modifizierung auf die Verarbeitungs- und Härtungseigenschaften sind die erfindungsgemäß modifizierten Reaktionsharze für alle Einsatzgebiete geeignet, in denen Duroplaste üblicherweise verwendet werden. Zusätzlich sind sie insbesondere für solche Anwendungen geeignet, bei denen reine Duroplaste wegen ihrer unbefriedigenden Bruch- und Schlagzähigkeit bisher nicht eingesetzt werden konnten. Geeignete Verwendungen der erfindungsgemäß modifizierten Reaktionsharze sind insbesondere solche zur Herstellung von bruch- und schlagzähen, gegebenenfalls ausgeformten duroplastischen Kunststoffen, faserverstärkten Kunststoffen, Isolierstoffen in der Elektrotechnik und Schichtpreßstoffen unter herkömmlicher Weiterverarbeitung und Härtung, die dadurch gekennzeichnet ist, daß vor oder während der weiteren Verarbeitung des modifizierten Reaktionsharzes eine chemische Umsetzung zwischen den Polyorganosiloxanteilchen und dem Reaktionsharz(gemisch) gemäß den Ansprüchen 24 bis 27 durchgeführt wird.

Die Erfindung wird anhand der nachstehenden Beispiele weiter erläutert. Alle angegebenen Teile und Prozentangaben sind auf das Gewicht bezogen, wenn nichts anderes angegeben ist.

Beispiel 1: Herstellung eines modifizierten ungesättigten Polyesterharzes

100 Teile eines handelsüblichen ungesättigten Polyesterharzes mit einem Styrolgehalt von 35 % und einer Viskosität bei 20° C von 650 mPa.s (Palatal 4P, Fa. BASF) werden bei 20° C mit einer Mischung vernetzbarer Polyorganosiloxane folgender Zusammensetzung vermischt:

14 Teile $\alpha,\omega$-Dihydroxypolydimethylsiloxan, Viskosität bei 20° C 200 mPa.s,

1 Teil $\alpha,\omega$-Di(trimethylsilyl)polymethylhydrogensiloxan, Viskosität bei 20° C 27 mPa.s (im folgenden als H-Siloxan bezeichnet),

0,1 Teile Dibutylzinndilaurat

3 Teile eines Kondensationsproduktes aus

70 % $\alpha, \omega$-Dihydroxypolymethylphenylsiloxan, Viskosität bei 20° C 80 mPa.s und

30 % Bisphenol-A-Monoacrylsäureester.

Die Mischung wurde 30 Minuten mit einem Dispergiergerät der Marke "Ultra-Turrax" dispergiert, wobei die Temperatur von 25 auf 50° C anstieg. Die so erhaltene weiße Emulsion wurde dann weitere 120 Minuten bei ca. 80° C leicht gerührt.

Die auf diese Weise erhaltene weiße, glatte Dispersion von vernetztem Polyorganosilikonkautschuk in ungesättigtem Polyesterharz wurde durch Zusatz von 2 Teilen handelsüblicher Cyclohexanonperoxid-Paste mit 0,2 Teilen Kobaltbeschleuniger (Luchem CS, Fa. Luperox) auf 100 Teile modifiziertes Polyesterharz bei Raumtemperatur gehärtet.

Eine rasterelektronenmikroskopische Untersuchung an einer Bruchfläche des Härtungsproduktes ergab, daß die Größe der Silikonkautschukteilchen sich kontinuierlich zwischen etwa 0,5 und 1,5 μm verteilte. Außerdem war an denjenigen Stellen, wo die Bruchoberfläche durch ein Kautschukteilchen lief, deutlich zu erkennen, daß ein fester Verbund zwischen Teilchen und Harzmatrix vorlag.

An dem erfindungsgemäß gehärteten Polyesterharz wurden verschiedene Messungen zur Charakterisierung der Verwendbarkeit als duroplastischer Werkstoff durchgeführt. Die gleichen Messungen wurden auch an einer Probe des auf gleiche Art und Weise gehärteten, aber unmodifizierten Polyesterharzes vorgenommen. Die Ergebnisse sind in der folgenden Tabelle 1 zusammengestellt.

Tabelle 1

| Eigenschaft | Prüfvorschrift | Einheit | Harz | |
|---|---|---|---|---|
| | | | modif. | unmodif. |
| Schlagzähigkeit | DIN 53453 | kJ/m$^2$ | 35 | 11 |
| Wärmeformbeständigkeit | DIN 53458 | °C | 56 | 55 |
| Elastizitätsmodul | DIN 53457 | N/mm$^2$ | 3300 | 3500 |
| Biegefestigkeit | DIN 53452 | N/mm$^2$ | 130 | 100 |
| Reißfestigkeit | DIN 53455 | N/mm$^2$ | 69 | 72 |

Die Versuchsergebnisse zeigen, daß die Schlagzähigkeit des erfindungsgemäß modifizierten Harzes um mehr als das Dreifache besser als die des unmodifizierten Harzes (Vergleichsbeispiel) ist bei nur geringfügigen Änderungen der übrigen untersuchten wesentlichen Eigenschaften.

Um die Eigenschaftsverbesserungen des modifizierten Harzes auch bei Anwendung als Glasfaserlaminat zu zeigen, wurde mit dem katalysierten Harz eine Glasfasermatte getränkt derart, daß der Glasfaseranteil im Verbundwerkstoff 25 % betrug. An diesem Material wurden folgende mechanische Eigenschaften gemessen, wieder im Vergleich zum unmodifizierten Harz:

Tabelle 2

| Eigenschaft | Einheit | modif. Harz | unmodif. Harz |
|---|---|---|---|
| Schlagzähigkeit | kJ/m$^2$ | 148 | 110 |
| Elastizitätsmodul | N/mm | 9750 | 10100 |
| Biegefestigkeit | N/mm$^2$ | 165 | 145 |
| Reißfestigkeit | N/mm$^2$ | 85 | 85 |
| Rießfestigkeit | N/mm$^2$ | 85 | 85 |

Auch hierbei wurden Verbesserungen der Schlagzähigkeit ohne Preisgabe anderer wichtiger Materialeigenschaften erreicht.

Beispiel 2: Herstellung eines modifizierten Vinylesterharzes

100 Teile eines handelsüblichen Vinylesterharzes mit einer Viskosität bei 20°C von 430 mPa.s und einem Styrolgehalt von 40 % (Palatal A 430, BASF) wurden bei 20°C mit einer Mischung vernetzbarer Polyorganosiloxane folgender Zusammensetzung vermischt:

14 Teile α, ω-Dihydroxypolydimethylsiloxan, Viskosität bei 20°C 1700 mPa.s,

1 Teil H-Siloxan (wie in Beispiel 1),

0,1 Teile Dibutylzinndilaurat,

2 Teile eines Hydrosilylierungsproduktes aus

80 % Bisphenol-A-Monoacrylsäureester und

20 % H-Siloxan (wie in Beispiel 1).

Die Mischung wurde 30 Minuten mit einem Ultra-Turrax-Dispergiergerät dispergiert, wobei die Temperatur von 25 auf 50°C anstieg. Danach wurde weiter unter langsamem Rühren auf 80°C erwärmt und bei dieser Temperatur 3 Stunden gehalten. Etwa 30 Minuten nach Beginn dieser Halteperiode wurden 3 Teile Vinyltrimethoxysilan zugegeben. Es wurde eine weiße, glatte Dispersion erhalten. Die Härtung erfolgte bei Raumtemperatur mit 1 Teil Methylethylketonperoxid und 0,5 Teilen des Kobaltbeschleunigers aus Beispiel 1.

Die auf die gleiche Weise wie in Beispiel 1 ermittelte Teilchengrößenverteilung lag zwischen 0,3 und 1,2 μm.

Die Messungen der mechanischen Eigenschaften ergaben die in Tabelle 3 zusammengestellten Ergebnisse, wieder im Vergleich zu auf identische Weise hergestellten unmodifizierten Probekörpern:

Tabelle 3

| Eigenschaft | Prüfvorschrift | Einheit | Harz | |
|---|---|---|---|---|
| | | | modif. | unmodif. |
| Schlagzähigkeit | DIN 53453 | kJ/m$^2$ | 112 | 43 |
| Wärmeformbeständigkeit | DIN 53458 | °C | 101 | 105 |
| Elastizitätsmodul | DIN 53457 | N/mm$^2$ | 4100 | 4120 |
| Biegefestigkeit | DIN 53452 | N/mm$^2$ | 185 | 155 |
| Reißfestigkeit | DIN 53455 | N/mm$^2$ | 90 | 88 |

Die Ergebnisse zeigen, daß die Schlagzähigkeit des erfindungsgemäß modifizierten gehärteten Harzes um das Zweieinhalbfache besser ist als die des unmodifizierten Harzes (Vergleichsbeispiel) bei sonst im wesentlichen unveränderten Eigenschaften des Duroplasten.

Beispiel 3: Herstellung eines modifizierten Bismaleinimid-Harzes

100 Teile eines bei Raumtemperatur festen, handelsüblichen Bismaleinimid-Harzes (Compimide 183, Fa. Technochemie) und 50 Teile Methylglykolacetat wurden unter Rühren auf eine Temperatur von 80°C erwärmt und vermischt, wobei sich eine Lösung mit einer Viskosität von ca. 800 mPa.s bildete. Diese Lösung wurde mit einer Mischung vernetzbarer Polyorganosiloxane folgender Zusammensetzung vermischt:
19 Teile α,ω-Divinylpolydimethylsiloxan, Viskosität bei 20°C 700 mPa.s,
1 Teil H-Siloxan (wie in Beispiel 1)
0,1 Teile einer 1 %igen Lösung von Hexachlorplatinsäure in 2-Propanol,
4 Teile eines Kondensationsproduktes aus
50 % α,ω-Dihydroxypolydimethylsiloxan mit einem viskosimetrisch ermittelten Molekulargewicht von 1450, bei dem 3 Mol-% der Methylgruppen durch Vinylgruppen ersetzt sind, und
50 % eines α-Allyloxy-ω-hydroxypolyethers, bestehend aus 75 Mol-% Propylenglykol- und 25 Mol-% Ethylenglykoleinheiten, mit einem mittleren Molekulargewicht von 1300.

Diese Mischung wurde 10 Minuten mit einem Ultra-Turrax-Dispergiergerät dispergiert, wobei die Temperatur von 80 auf 110°C anstieg. Diese Temperatur wurde anschließend noch über 120 Minuten bei leichtem Rühren gehalten.

Es wurde eine gelbliche, glatte Dispersion erhalten, die mit 0,5 Teilen Diazabicyclooctan als Härtungskatalysator versetzt wurde.

Anschließend wurde bei 80°C das Lösungsmittel unter Vakuum weitgehend abdestilliert. Das Resultat war ein bei Raumtemperatur festes, zähelastisch modifiziertes vorreagiertes Bismaleinimid-Harz, das bei Temperaturen oberhalb von 150°C zu einem harten, zähen und sehr temperaturstabilen Duromeren härtete. Die Teilchengrößenverteilung der Kautschukteilchen lag bei 0,5 bis 3,3 μm.

Zur Charakterisierung der Zähelastifizierung wurde an diesem relativ spröden Harz aufgrund der größeren Genauigkeit nicht die Schlagzähigkeit, sondern die im Zugversuch an einem einseitig gekerbten Stab von 76 x 13 x 6,5 mm gemessene Bruchenergie ermittelt. Ferner wurden drei wesentliche Eigenschaften der Duroplasten gemessen; die Ergebnisse sind in Tabelle 4 zusammengestellt.

Tabelle 4

| Eigenschaft | Einheit | modif. Harz | unmodif. Harz |
|---|---|---|---|
| Bruchenergie | J/m$^2$ | 1200 | 180 |
| Elastizitätsmodul | N/mm$^2$ | 3850 | 4100 |
| Biegefestigkeit | N/mm$^2$ | 90 | 100 |
| Maximale Dehnung | % | 3 | 3 |

Danach ist die Bruchenergie des erfindungsgemäß modifizierten, gehärteten Reaktionsharzes um mehr als das 6 1/2-fache größer als bei dem entsprechenden unmodifizierten Reaktionsharz, während die übrigen, für Duroplaste charakteristischen Eigenschaften nur unwesentlich differieren.

Beispiel 4: Herstellung eines modifizierten Epoxid-Harzes

100 Teile eines handelsüblichen Epoxid-Harzes mit einer Viskosität bei 20° C von 10.500 mPa.s und einem EpoxidÄquivalentgewicht von 182 (Epicote 828, Fa. Shell) wurden bei einer Temperatur von 50° C mit einer Mischung vernetzbarer Polyorganosiloxane folgender Zusammensetzung vermischt:

57 Teile α,ω-Divinylpolydimethylsiloxan, Viskosität bei 20° C 700 mPa.s,

3 Teile H-Siloxan (wie in Beispiel 1),

0,3 Teile einer 1 %igen Lösung von Hexachlorplatinsäure in 2-Propanol,

6 Teile eines Hydrosilylierungsproduktes aus

40 % eines Silikoncopolymeren aus 75 % Dimethylsiloxan- und 25 % Methylhydrogensiloxaneinheiten mit Trimethylsilylendgruppen, Viskosität bei 20° C 120 mPa.s, und

60 % eines epoxidierten Allylalkohols mit 10 Mol Ethylenoxid,

6 Teile eines Hydrosilylierungsproduktes aus

50 % H-Siloxan (wie in Beispiel 1) und

50 % Allylglycidylether.

Diese Mischung wurde 15 Minuten mit einem Ultra-Turrax-Dispergiergerät dispergiert, wobei die Temperatur von 50 auf 80° C anstieg. Danach wurde weiter auf 110° C erwärmt und bei dieser Temperatur unter leichtem Rühren 120 Minuten gehalten. Es wurde eine glatte, weiße Dispersion von Silikonkautschuk in Epoxid-Harz erhalten mit einer Viskosität bei 20° C von 45.000 mPa.s und einer nach der Härtung auf zuvor beschriebene Weise ermittelten Teilchengrößenverteilung von 0,25 bis 2,4 μm.

Vergleichsbeispiel 4a: Herstellung eines nach dem Stand der Technik kautschukmodifizierten Epoxid-Harzes

100 Teile des Epoxid-Harzes aus Beispiel 4 wurden mit 67 Teilen eines handelsüblichen carboxylgruppenterminierten flüssigen Acrylnitril-Butadienkautschuks (Hycar 1300X8, Fa. B.F. Goodrich) vermischt, 0,25 Teile Triphenylphosphin zugegeben und die Gesamtmischung 3 Stunden bei 100° C gehalten. Danach war die Säurezahl auf unter 0,1 abgesunken, was bedeutet, daß die vorgesehene Umsetzung der Carboxylgruppen mit dem Epoxid-Harz praktisch vollständig abgelaufen war. Erhalten wurde eine klare, hochviskose Flüssigkeit mit einer Viskosität bei 20° C von 185.000 mPa.s.

Mit den modifizierten Epoxidharzen aus den Beispielen 4 und 4a wurden zwei Versuchsreihen mit jeweils variierenden Kautschukmengen im Epoxid-Harz durchgeführt. Hierzu wurden die modifizierten Harze durch Zusatz von unmodifiziertem Harz auf den gewünschten Kautschukgehalt eingestellt. Die Härtung erfolgte mittels eines für die Erzeugung von temperaturbeständigen Epoxid-Harzen gebräuchlichen Säureanhydrid-Härters (Lindride 22, Fa. Shell) unter Zusatz von 1 phr 2,4,6-Tri(dimethylaminomethyl)phenol als Katalysator bei 120° C. Die Ergebnisse sind in der Tabelle 5 zusammengefaßt.

Die Ergebnisse zeigen deutlich, daß die erfindungsgemäße Modifizierung dem Stand der Technik bezüglich der Verbesserung der Bruchenergie überlegen ist, ohne dessen Nachteile bezüglich der Verschlechterung anderer vorteilhafter Eigenschaften aufzuweisen.

Beispiel 5: Herstellung eines modifizierten Epoxid-Harzes und seine Verwendung in einem Glasfaserlaminat

50 Teile des unmodifizierten Epoxidharzes aus Beispiel 4 wurden mit 50 Teilen eines handelsüblichen, bei Raumtemperatur halbfesten Epoxy-Novolak-Harzes (Epikote 155, Fa. Shell) bei 70° C vermischt. Sodann wurde bei dieser Temperatur eine Mischung vernetzbarer Polyorganosiloxane folgender Zusammensetzung zugegeben:

9,5 Teile α,ω-Dihydroxypolydimethylsiloxan, Viskosität bei 20° C 2400 mPa.s,

0,5 Teile Tetraethoxysilan,

0,01 Teile Dibutylzinnlaurat,

1 Teil eines Additionsproduktes aus

75 % α,ω-Dihydroxypolymethylphenylsiloxan, Viskosität bei 20° C 80 mPa.s, und

25 % Bisphenol-A-Diglycidylether.

Tabelle 5:

| Versuch Nr. | Kautschukgehalt im Endprodukt (%) | Elastizitäts-modul ($N/mm^2$) | Reiß-festigkeit ($N/mm^2$) | Bruch-energie ($kJ/m^2$) | Martens-Temp. (°C) |
|---|---|---|---|---|---|
| 4/0 (Vergleich) | 0 | 2950 | 70 | 2 | 112 |
| 4/1 | 5 | 2950 | 66 | 10 | 112 |
| 4/2 | 10 | 2900 | 65 | 21 | 112 |
| 4/3 | 15 | 2860 | 62 | 26 | 110 |
| 4a/1 (Vergleich) | 5 | 2760 | 65 | 12 | 111 |
| 4a/2 (Vergleich) | 10 | 2350 | 59 | 18 | 108 |
| 4a/3 (Vergleich) | 15 | 2240 | 51 | 21 | 102 |

Diese Mischung wurde anschließend 10 Minuten mit einem Ultra-Turrax-Dispergiergerät homogenisiert, wobei die Temperatur von 70 auf 95° C anstieg. Danach wurden 1,5 Teile Glycidyloxypropyltrimethoxysilan als Reaktionsvermittler zugegeben und die Gesamtmischung ca. 120 Minuten bei 100° C unter leichtem Rühren gehalten. Es wurde eine hochviskose, weiße Emulsion erhalten, die bei Raumtemperatur halbfest war.

14

Die an einer gehärteten Probe ermittelte Teilchengrößenverteilung wies eine bimodale Charakteristik auf mit Maxima bei 0,45 und bei 2 µm.

Vergleichsbeispiel 5a:

Beispiel 5 wurde wiederholt mit dem Unterschied, daß kein Glycidyloxypropyltrimethoxysilan zugesetzt wurde. Das erhaltene Produkt unterschied sich äußerlich nicht vom erfindungegemäßen Produkt des Beispiels 5.

Beim Vergleich rasterelektronenmikroskopischer Aufnahmen der Bruchflächen der gehärteten Harze zeigte sich jedoch, daß die Silikonkautschukteilchen in dem Harz aus Vergleichsbeispiel 5a im Unterschied zu denen des erfindungsgemäßen Harzes des Beispiels 5 keinerlei Bindung zu der Harzmatrix aufwiesen und zum Teil aus der Oberfläche der Bruchteile einfach herausgefallen waren, was an den verbliebenen Löchern im Harzmaterial gut zu erkennen war.

Die nach den Beispielen 5 und 5a hergestellten modifizierten Harze wurden einer vergleichenden Prüfung unterzogen zur Feststellung ihres Einflusses auf die Eigenschaften von daraus hergestellten Glasfaserlaminaten.

Dazu wurden die modifizierten Harze mit der jeweils äquivalenten Menge Methylenbisanilin als Härter versetzt und damit bei 60° C Glasfaservliese getränkt, die anschließend bei 100° C 2 Stunden gehärtet wurden. Der Harzgehalt im Laminat betrug 35 %.

Die in nachstehender Tabelle 6 aufgeführten Meßwerte zeigen, daß die als Kriterium gemessene interlaminare Bruchenergie durch die erfindungsgemäße Verwendung eines Reaktionsvermittlers wesentlich verbessert wird.

Tabelle 6:

| Eigenschaft | Einheit | Glasfaserlaminat mit | |
| | | modif. Harz mit Vermittler | modif. Harz ohne Vermittler |
| --- | --- | --- | --- |
| Bruchenergie | $J/m^2$ | 4900 | 1200 |
| Elastizitätsmodul | $N/mm^2$ | 28500 | 30100 |

**Patentansprüche**

1. Modifiziertes Reaktionsharz, enthaltend:

(a) 50 - 98 Gew.-% eines zu Duroplasten verarbeitbaren, bei Temperaturen im Bereich von 18 bis 100° C flüssigen Reaktionsharzes oder Reaktionsharzgemisches mit einem mittleren Molekulargewicht von 200 bis 500.000 und mit einer für den Härtungsprozeß ausreichenden Zahl geeigneter reaktiver Gruppen und

(b) 2 - 50 Gew.-% eines oder mehrerer dreidimensional vernetzter Polyorganosiloxankautschuke, die in dem Reaktionsharz oder Reaktionsharzgemisch in feinverteilter Form als Polyorganosiloxankautschuk-Teilchen mit einem Durchmesser von 0,01 bis 50 µm enthalten sind, wobei die Kautschukteilchen an ihrer Oberfläche reaktive Gruppen aufweisen, die, gegebenenfalls in Gegenwart von als Reaktionsvermittler dienenden Hilfsmitteln, vor oder bei der weiteren Verarbeitung des modifizierten Reaktionsharzes mit dem Reaktionsharz chemisch reagieren, gegebenenfalls zusammen mit geringen Mengen an Hilfsstoffen.

2. Modifiziertes Reaktionsharz nach Anspruch 1, dadurch gekennzeichnet, daß das zu modifizierende Reaktionsharz aus ein oder mehreren Epoxid-, Urethan- und/oder lufttrocknenden Alkydharzen besteht.

3. Modifiziertes Reaktionsharz nach Anspruch 1, dadurch gekennzeichnet, daß das zu modifizierende Reaktionsharz aus ein oder mehreren Phenol-, Resorcinund/oder Kresolharzen, Harnstoff-Formaldehyd- und/oder Melamin-Formaldehyd-Vorkondensaten, Furanharzen, gesättigten Polyesterharzen und/oder Silikonharzen besteht.

4. Modifiziertes Reaktionsharz nach Anspruch 1, dadurch gekennzeichnet, daß das zu modifizierende Reaktionsharz aus ein oder mehreren Homo- oder Copolymerisaten der Acrylsäure und/oder Methacrylsäure oder ihrer Ester besteht.

5. Modifiziertes Reaktionsharz nach Anspruch 1, dadurch gekennzeichnet, daß das zu modifizierende Reaktionsharz aus ein oder mehreren ungesättigten Polyesterharzen, Vinylesterharzen und/oder Maleinimidharzen besteht.

6. Modifiziertes Reaktionsharz nach den Ansprüchen 1 bis 5, dadurch gekennzeichnet, daß das zu modifizierende Reaktionsharz oder Reaktionsharzgemisch ein mittleres Molekulargewicht von 300 bis 20.000 aufweist.

7. Modifiziertes Reaktionsharz nach den Ansprüchen 1 bis 6, dadurch gekennzeichnet, daß die dreidimensional vernetzten Polyorganosiloxankautschuke sich von Siloxaneinheiten der allgemeinen Formel

$$-(R_2SiO)- \qquad (1)$$

ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyl- oder Alkylphenylgruppen mit 1 bis 12 C-Atomen im aliphatischen Rest, wobei die Kohlenwasserstoffreste auch durch Halogene oder Hydroxyl-, Carboxyl-, Carbonsäureanhydrid-, Amino-, Epoxy-, Alkoxy- oder Alkenyloxygruppen substituiert sein können, ferner Polyether- oder Polyolefingruppen sowie Wasserstoff darstellen, wobei die Gruppen direkt oder über ein Sauerstoff- oder Stickstoffatom mit einem Siliciumatom der Polysiloxankette verbunden sind.

8. Modifiziertes Reaktionsharz nach Anspruch 7, dadurch gekennzeichnet, daß der Polyorganosiloxankautschuk ein Blockcopolymeres ist, bei dem einwertige Reste R' und R" entlang der Siloxanhauptkette in Blöcken angeordnet sind, die sich von Polymereinheiten der allgemeinen Formel

$$-(R'_2SiO)_x-(R''_2SiO)_y- \qquad (2)$$

ableiten, wobei die Reste R' und R", die die gleiche Bedeutung wie R haben, voneinander verschieden sind, während die Reste R' bzw. R" unter sich gleich oder verschieden sein können, und x und y gleich 1 oder ganzzahlige Vielfache davon sind.

9. Modifiziertes Reaktionsharz nach den Ansprüchen 7 und 8, dadurch gekennzeichnet, daß mindestens 50% der Reste R, R' bzw. R" Methyl- und/oder Phenylgruppen sind.

10. Modifiziertes Reaktionsharz nach den Ansprüchen 1 bis 9, dadurch gekennzeichnet, daß die in dem Reaktionsharz dispergierten PolyorganosiloxankautschukTeilchen einen Durchmesser im Bereich von 0,05 bis 20 μm aufweisen.

11. Modifiziertes Reaktionsharz nach den Ansprüchen 1 bis 9, dadurch gekennzeichnet, daß die in dem Reaktionsharz dispergierten PolyorganosiloxankautschukTeilchen einen Durchmesser im Bereich von 0,1 bis 5 μm aufweisen.

12. Verfahren zur Herstellung von modifizierten Reaktionsharzen gemäß den Ansprüchen 1 bis 11, dadurch gekennzeichnet, daß

(a) eine Dispersion von 2 - 50 Gew.-% eines oder mehrerer dreidimensional vernetzbarer, flüssiger Polyorganosiloxane mit einem mittleren Molekulargewicht von 800 bis 500.000, die in den zu modifizierenden Reaktionsharzen nicht oder nur wenig löslich sind, gegebenenfalls zusammen mit geringen Mengen an Hilfsstoffen, insbesondere an Vernetzungsmitteln, Katalysatoren, Dispergiermitteln und/oder Härtungsmitteln, in 50 - 98 Gew.-% eines zu Duroplasten verarbeitbaren, bei Temperaturen von 18 bis 120°C flüssigen Reaktionsharzes oder Reaktionsharzgemisches mit einem mittleren Molekulargewicht von 200 bis 500.000 hergestellt wird, in der die Polyorganosiloxantröpfchen

16

mit einem Durchmesser im Bereich von 0,01 bis 50 μm vorliegen, und

(b) eine dreidimensionale Vernetzung in den Polyorganosiloxantröpfchen zu Polyorganosiloxankautschuk-Teilchen mit an ihrer Oberfläche gegenüber dem Reaktionsharz chemisch reaktiven Gruppen und mit einem Durchmesser von 0,01 bis 50 μm durchgeführt wird, wobei die Reaktionsbedingungen so gewählt werden, daß keine oder nur eine unwesentliche Härtungsreaktion im Reaktionsharz selbst stattfindet.

13. Verfahren nach Anspruch 12, dadurch gekennzeichnet, daß in Stufe (a) eine Dispersion unter Verwendung eines bei Temperaturen von 20 bis 100°C flüssigen Reaktionsharzes oder Reaktionsharzgemisches hergestellt wird.

14. Verfahren nach Anspruch 12 oder 13, dadurch gekennzeichnet, daß in Verfahrensstufe (a) 5 bis 30 Gew.-% eines oder mehrerer dreidimensional vernetzbarer, flüssiger Polyorganosiloxane eingesetzt werden.

15. Verfahren nach den Ansprüchen 12 bis 14, dadurch gekennzeichnet, daß das in Stufe (a) eingesetzte unvernetzte Polyorganosiloxan oder Polyorganosiloxangemisch ein mittleres Molekulargewicht von 1.000 bis 100.000 aufweist.

16. Verfahren nach den Ansprüchen 12 bis 14, dadurch gekennzeichnet, daß das in Stufe (a) eingesetzte unvernetzte Polyorganosiloxan oder Polyorganosiloxangemisch ein mittleres Molekulargewicht von 1.200 bis 30.000 aufweist.

17. Verfahren nach den Ansprüchen 12 bis 16 mit der Abänderung, daß die flüssigen Polyorganosiloxane zunächst in einem nicht oder nur wenig mit den Polyorganosiloxanen mischbaren Medium dispergiert und anschließend in an sich bekannter Weise vernetzt werden, bevor sie mit dem zu modifizierenden Reaktionsharz oder Reaktionsharzgemisch vermischt werden, wobei gegebenenfalls nach dem Vermischen das Dispergiermedium in geeigneter Weise entfernt wird.

18. Verfahren nach Anspruch 17, dadurch gekennzeichnet, daß als Dispergiermedium Wasser eingesetzt wird.

19. Verfahren nach den Ansprüchen 12 bis 16, dadurch gekennzeichnet, daß die unvernetzten flüssigen Polyorganosiloxane in einem Verfahrensschritt direkt in dem flüssigen Reaktionsharz oder Reaktionsharzgemisch dispergiert und vernetzt werden.

20. Verfahren nach Anspruch 19, dadurch gekennzeichnet, daß Polyorganosiloxane eingesetzt werden, bei denen mehr als 50% aller Organogruppen der Siloxanhauptkette Methylgruppen sind.

21. Verfahren nach den Ansprüchen 12 bis 20, dadurch gekennzeichnet, daß in Stufe (a) als Dispergiermittel Verbindungen mit amphiphiler Struktur eingesetzt werden, wobei ein Teil der Gruppen solcher amphiphiler Moleküle so ausgewählt ist, daß er mit den eingesetzten Polyorganosiloxanen verträglich ist, während ein anderer Teil der Gruppen so ausgewählt ist, daß er mit dem Reaktionsharz bzw. Reaktionsharzgemisch verträglich ist.

22. Verfahren nach Anspruch 21, dadurch gekennzeichnet, daß Dispergiermittel mit einem mittleren Molekulargewicht von 300 bis 50.000 eingesetzt werden.

23. Verfahren nach den Ansprüchen 21 und 22, dadurch gekennzeichnet, daß als Dispergiermittel Copolymere mit einem Polyorganosiloxanteil und einem kohlenstofforganischen Teil, der mit dem Reaktionsharz bzw. Reaktionsharzgemisch verträglich ist, eingesetzt werden.

24. Weiterbildung des Verfahrens nach den Ansprüchen 12 bis 23, umfassend die Verfahrensstufen (a) und (b), dadurch gekennzeichnet, daß in einer weiteren Verfahrensstufe (c) eine chemische Umsetzung zwischen den Polyorganosiloxanteilchen und dem Reaktionsharz oder Reaktionsharzgemisch durchgeführt wird, durch die eine chemische Bindung zwischen den Polyorganosiloxanteilchen und dem Reaktionsharz bzw. Reaktionsharzgemisch bewirkt wird.

**25.** Verfahren nach Anspruch 24, dadurch gekennzeichnet, daß in Stufe (a) ein amphiphiles Dispergiermittel mit einem kohlenstofforganischen Teil eingesetzt wird, der reaktive Gruppen aufweist, die in Verfahrensstufe (c) als Reaktionsvermittler chemische Bindungen zwischen den Polyorganosiloxanteilchen und dem Reaktionsharz bzw. Reaktionsharzgemisch bewirken.

**26.** Verfahren nach den Ansprüchen 24 und 25, dadurch gekennzeichnet, daß in Verfahrensstufe (c) als Reaktionsvermittler Organoalkyloxysilane und/oder Organo-Silikon-Copolymere mit an die Polyorganosiloxane und Reaktionsharze angepaßten reaktiven Gruppen eingesetzt werden.

**27.** Verfahren nach den Ansprüchen 24 bis 26, dadurch gekennzeichnet, daß die chemische Umsetzung in Stufe (c) zusammen mit dem Dispergieren und Vernetzen der flüssigen Polyorganosiloxane in dem Reaktionsharz oder Reaktionsharzgemisch in einem Verfahrensschritt durchgeführt wird.

**28.** Verwendung der modifizierten Reaktionsharze gemäß den Ansprüchen 1 bis 11 zur Herstellung von bruch- und schlagzähen, gegebenenfalls ausgeformten duroplastischen Kunststoffen, faserverstärkten Kunststoffen, Isolierstoffen in der Elektrotechnik und Schichtpreßstoffen unter herkömmlicher Weiterverarbeitung und Härtung, dadurch gekennzeichnet, daß vor oder während der weiteren Verarbeitung des modifizierten Reaktionsharzes eine chemische Umsetzung zwischen den Polyorganosiloxanteilchen und dem Reaktionsharz(gemisch) gemäß den Ansprüchen 24 bis 27 durchgeführt wird..

## Claims

**1.** Modified reaction resin, containing:
(a) 50 - 98 wt-% of a reaction resin or reaction resin mixture which can be processed to produce thermoset plastics and is liquid at temperatures in the range of 18 to 100°C, with an average molecular weight of 200 to 500,000 and with a sufficient number of suitable reactive groups for the hardening process, and
(b) 2 - 50 wt-% of one or more three-dimensionally cross-linked polyorganosiloxane rubbers, which are contained in the reaction resin or reaction resin mixture in finely-divided form as polyorganosiloxane rubber particles with a diameter of 0.01 to 50 $\mu$m, the rubber particles having reactive groups at their surface which, optionally in the presence of auxiliary agents serving as reaction promoters, chemically react with the reaction resin before or during the further processing of the modified reaction resin, optionally together with small quantities of auxiliary agents.

**2.** Modified reaction resin according to claim 1, characterized in that the reaction resin to be modified comprises one or more epoxide, urethane and/or air-drying alkyd resins.

**3.** Modified reaction resin according to claim 1, characterized in that the reaction resin to be modified comprises one or more phenolic, resorcinol and/or cresylic resins, ureaformaldehyde and/or melamineformaldehyde precondensates, furan resins, saturated polyester resins and/or silicone resins.

**4.** Modified reaction resin according to claim 1, characterized in that the reaction resin to be modified comprises one or more homo- or copolymerizates of acrylic acid and/or methacrylic acid or esters thereof.

**5.** Modified reaction resin according to claim 1, characterized in that the reaction resin to be modified comprises one or more unsaturated polyester resins, vinyl ester resins and/or maleic imide resins.

**6.** Modified reaction resin according to claims 1 to 5, characterized in that the reaction resin or reaction resin mixture to be modified has an average molecular weight of 300 to 20,000.

**7.** Modified reaction resin according to claims 1 to 6, characterized in that the three-dimensionally cross-linked polyorganosiloxane rubbers are derived from siloxane units of the general formula

$$-(R_2SiO)- \quad (1)$$

in which both monovalent residues R, which can be the same or different, represent linear or branched alkyl groups with 1 to 18 C atoms, cycloaliphatic groups with 4 to 8 C atoms, linear or branched alkenyl groups with 2 to 4 C atoms, phenyl or alkylphenyl groups with 1 to 12 C atoms in the aliphatic residue, the hydrocarbon residues also being able to be substituted by halogens or hydroxyl, carboxyl, carboxylic acid anhydride, amino, epoxy, alkoxy or alkenyloxy groups, further representing polyether or polyolefin groups and hydrogen, the groups being connected directly or via an oxygen or nitrogen atom with a silicone atom of the polysiloxane chain.

8. Modified reaction resin according to claim 7, characterized in that the polyorganosiloxane rubber is a block copolymer where monovalent residues R' and R" are arranged along the main siloxane chain in blocks which are derived from polymer units of the general formula

$$-(R'_2SiO)_x-(R''_2SiO)_y- \qquad (2)$$

the residues R' and R", which have the same significance as R, being different from each other, whilst amongst themselves the residues R' or R" can be the same or different, and x and y equal 1 or are integral multiples thereof.

9. Modified reaction resin according to claims 7 and 8, characterized in that at least 50 % of the residues R, R' or R" are methyl and/or phenyl groups.

10. Modified reaction resin according to claims 1 to 9, characterized in that the polyorganosiloxane rubber particles dispersed in the reaction resin have a diameter in the range of 0.05 to 20 $\mu$m.

11. Modified reaction resin according to claims 1 to 9, characterized in that the polyorganosiloxane rubber particles dispersed in the reaction resin have a diameter in the range of 0.1 to 5 $\mu$m.

12. Process for preparing modified reaction resins according to claims 1 to 11, characterized in that
(a) a dispersion is prepared from 2 - 50 wt-% of one or more three-dimensionally cross-linkable liquid polyorganosiloxanes with an average molecular weight of 800 to 500,000 which are not soluble, or only slightly soluble, in the reaction resins to be modified, optionally together with small amounts of auxiliary agents, particularly cross-linking agents, catalysts, dispersing agents and/or hardening agents, in 50 - 98 wt-% of a reaction resin or reaction resin mixture which can be processed to produce thermoset plastics and is liquid at temperatures of 18 to 120 °C, with an average molecular weight of 200 to 500,000, in which dispersion the polyorganosiloxane droplets are present with a diameter in the range of 0.01 to 50 $\mu$m and
(b) three-dimensional cross-linking is carried out in the polyorganosiloxane droplets to produce polyorganosiloxane rubber particles with groups at their surface which are chemically reactive with the reaction resin and with a diameter of 0.01 to 50 $\mu$m, the reaction conditions being so chosen that no hardening reaction, or only an insignificant one, takes place in the reaction resin itself.

13. Process according to claim 12, characterized in that, in step (a) a dispersion is prepared using a reaction resin or reaction resin mixture which is liquid at temperatures of 20 to 100 °C.

14. Process according to claims 12 or 13, characterized in that, in process step (a) 5 to 30 wt-% of one or more three-dimensionally cross-linkable, liquid polyorganosiloxanes are used.

15. Process according to claims 12 to 14, characterized in that the non-cross-linked polyorganosiloxane or polyorganosiloxane mixture used in step (a) has an average molecular weight of 1,000 to 100,000.

16. Process according to claims 12 to 14, characterized in that the non-cross-linked polyorganosiloxane or polyorganosiloxane mixture used in step (a) has an average molecular weight of 1,200 to 30,000.

17. Process according to claims 12 to 16 with the modification that the liquid polyorganosiloxanes are firstly dispersed in a medium which is not miscible, or only slightly miscible, with the polyorganosiloxanes and subsequently cross-linked in a manner known per se, before they are mixed with the reaction resin or reaction resin mixture to be modified, the dispersing medium being optionally removed in a suitable way after mixing.

18. Process according to claim 17, characterized in that water is used as dispersing medium.

19. Process according to claims 12 to 16, characterized in that the non-cross-linked liquid polyorganosiloxanes are directly dispersed and cross-linked in the liquid reaction resin or reaction resin mixture in one process step.

20. Process according to claim 19, characterized in that polyorganosiloxanes with more than 50 % of all organic groups of the main siloxane group being methyl groups, are used.

21. Process according to claims 12 to 20, characterized in that, in step (a) compounds with amphiphilic structure are used as dispersing agent, a portion of the groups of such amphiphilic molecules being so chosen that said portion is compatible with the polyorganosiloxanes used, whilst another portion of the groups is so chosen that said portion is compatible with the reaction resin or reaction resin mixture.

22. Process according to claim 21, characterized in that dispersing agents with an average molecular weight of 300 to 50,000 are used.

23. Process according to claims 21 and 22, characterized in that copolymers with a polyorganosiloxane portion and an organocarbon portion which is compatible with the reaction resin or reaction resin mixture, are used as dispersing agent.

24. Continuation of the process according to claims 12 to 23, comprising process steps (a) and (b), characterized in that, in a further process step (c) a chemical conversion is carried out between the polyorganosiloxane particles and the reaction resin or reaction resin mixture, which conversion causes a chemical bond between the polyorganosiloxane particles and the reaction resin or reaction resin mixture.

25. Process according to claim 24, characterized in that, in step (a) an amphiphilic dispersing agent with an organocarbon portion which has reactive groups is used, which reactive groups, as reaction promoters, cause chemical bonds in step (c) between the polyorganosiloxane particles and the reaction resin or reaction resin mixture.

26. Process according to claims 24 and 25, characterized in that, in process step (c) organoalkyloxysilanes and/or organo-silicone-copolymers with reactive groups adapted to the polyorganosiloxanes and reaction resins, are used as reaction promoters.

27. Process according to claims 24 to 26, characterized in that the chemical conversion in step (c) together with the dispersing and cross-linking of the liquid polyorganosiloxanes in the reaction resin or reaction resin mixture is carried out in one process step.

28. Use of the modified reaction resins according to claims 1 to 11 for producing fracture and impact resistant, optionally moulded thermosetting plastic materials, fibre-reinforced plastic materials, insulating materials for electrical engineering and laminated materials using conventional further processing and hardening methods, characterized in that before or during the further processing of the modified reaction resin, a chemical conversion between the polyorganosiloxane particles and the reaction resin (mixture) according to claims 24 to 27 is carried out.

**Revendications**

1.  Résine de réaction ou réactive, modifiée, qui contient:

    (a) 50 à 98% en poids d'une résine réactive, ou d'un mélange de résines réactives, liquide à des températures qui varient de 18 à 100° C, que l'on peut transformer en matières duroplastiques ou duroplastes, possédant une masse moléculaire moyenne de 200 à 500.000 et comportant un nombre de radicaux réactifs convenables qui suffit au processus de durcissement et
    (b) 2 à 50% en poids d'un ou plusieurs caoutchoucs polyorganosiloxanniques tridimensionnellement réticulés, que la résine réactive ou le mélange de résines réactives contient sous forme finement divisée en tant que particules de caoutchouc polyorganosiloxannique, d'un diamètre de 0,01 à 50 μm, où les particules de caoutchouc présentent, à leur surface, des radicaux réactifs qui, éventuellement en présence d'adjuvants servant d'agents conférant de la réactivité, réagissent chimiquement

EP 0 266 513 B1

avec la résine réactive avant ou pendant le traitement ultérieur de la résine réactive modifiée, éventuellement en même temps qu'avec de faibles quantités d'adjuvants.

2. Résine réactive modifiée suivant la revendication 1, caractérisée en ce que la résine réactive à modifier se compose d'une ou plusieurs résines du type époxyde, uréthanne et/ou alkyd qui sèche à l'air.

3. Résine réactive modifiée suivant la revendication, caractérisée en ce que la résine de réaction à modifier se compose d'une ou plusieurs résines de phénol, de résorcinol et/ou de crésol, de précondensats d'uréeformaldéhyde et/ou de mélamine-formaldéhyde, de résines de furanne, de résines de polyester saturées et/ou de résines de silicone.

4. Résine réactive modifiée suivant la revendication 1, caractérisée en ce que la résine réactive à modifier se compose d'un ou plusieurs homopolymères ou copolymères de l'acide acrylique et/ou de l'acide méthacrylique, ou de leurs esters.

5. Résine réactive modifiée suivant la revendication 1, caractérisée en ce que la résine réactive à modifier se compose d'une ou plusieurs résines de maléimide, résines d'ester vinylique et/ou résines de polyester insaturées.

6. Résine réactive modifiée suivant les revendications 1 à 5, caractérisée en ce que la résine réaéctive à modifier ou le mélange de résines réactives à modifier présente une masse moléculaire moyenne de 300 à 20.000.

7. Résine réactive modifiée suivant les revendications 1 à 6, caractérisée en ce que les caoutchoucs de polyorganosiloxanne tridimensionnellement réticulés dérivent d'unités siloxanne de la formule générale.

$$-(R_2SiO)- \qquad (1)$$

dans laquelle les deux radicaux monovalents R, qui peuvent être identiques ou différents, représentent des radicaux alkyle linéaires ou ramifiés comportant de 1 à 18 atomes de carbone, des radicaux cycloaliphatiques comportant de 4 à 8 atomes de carbone, des radicaux alcényle linéaires ou ramifiés comportant de 2 à 4 atomes de carbone, des radicaux phényle ou alkylphényle, dont le groupe aliphatique comporte de 1 à 12 atomes de carbone, où les restes hydrocarbonés peuvent également être substitués par des halogènes ou des radicaux hydroxyle, carboxyle, anhydride carboxylique, amino, époxy, alcoxy ou alcényloxy, et également des radicaux polyéther ou polyoléfine, comme encore de l'hydrogène, où les radicaux sont liés directement ou par l'intermédiaire d'un atome d'oxygène ou d'azote à un atome de silicium de la chaîne polysiloxannique.

8. Résine réactive modifiée suivant la revendication 7, caractérisée en ce que le caoutchouc de polyorganosiloxanne est un copolymère à blocs dans lequel des radicaux R' et R" monovalents sont agencés par blocs le long de la chaîne principale siloxannique, qui dérivent d'unités polymériques de la formule générale:

$$-(R'_2SiO)_x-(R''_2SiO)_y- \qquad (2)$$

dans laquelle les substituants R' et R" qui possèdent la même signification que R diffèrent mutuellement, cependant que les substituants R' et R" peuvent être mutuellement identiques ou différents et x et y sont égaux à 1 ou en sont des nombres multiples entiers.

9. Résine réactive modifiée suivant les revendications 7 et 8, caractérisée en ce qu'au moins 50% des substituants R, R' et R" représentent des radicaux méthyle et/ou phényle.

10. Résine réactive modifiée suivant les revendications 1 à 9, caractérisée en ce que les particules de caoutchouc polyorganosiloxannique dispersées dans la résine réactive, présentent un diamètre qui varie de 0,05 à 20 $\mu$m.

11. Résine réactive modifiée selon les revendications 1 à 9, caractérisée en ce que les particules de caoutchouc polyorganosiloxannique dispersées dans la résine réactive présentent un diamètre qui

21

EP 0 266 513 B1

fluctue de 0,1 à 5μm.

12. Procédé de préparation de résines réactives modifiées selon les revendications 1 à 11, caractérisé en ce que

(a) on prépare une dispersion de 2 à 50% en poids d'un ou plusieurs polyorganosiloxannes liquides, tridimensionnellement réticulables, possédant une masse moléculaire moyenne de 800 à 500.000, qui ne sont pas ou peu solubles dans les résines réactives à modifier, éventuellement en même temps que de faibles quantités d'adjuvants, plus particulièrement des agents dispersifs et/ou des agents de durcissement, dans 50 à 98% en poids d'une résine réactive ou d'un mélange de résines réactives, liquide à des températures de 18 à 120° C, transformable ou ouvrable en une matière duroplastique ou duroplaste, possédant une masse moléculaire moyenne de 200 à 500.000, dispersion dans laquelle les gouttelettes de polyorganosiloxanne se présentent avec un diamètre variant dans la plage de 0,01 à 50 μm et

(b) on entreprend une réticulation tridimensionnelle dans les gouttelettes de polyorganosiloxanne en particules de caoutchouc polyorganosiloxannique, qui comportent des radicaux chimiquement réactifs avec la résine réactive à leur surface et qui possèdent un diamètre de 0,01 à 50 μm, où l'on choisit les conditions réactionnelles en une manière telle qu'il ne se produise pas, ou alors seulement dans une mesure négligeable, de réaction de durcissement dans la résine réactive elle-même.

13. Procédé suivant la revendication 12, caractérisé en ce que l'on prépare une dispersion au cours de l'étape (a) en recourant à l'emploi d'une résine réactive ou d'un mélange de résines réactives, liquide à des températures de 20 à 100° C.

14. Procédé suivant la revendication 12 ou 13, caractérisé en ce que l'on utilise, au cours de l'étape opératoire (a), de 5 à 30% en poids d'un ou plusieurs polyorganosiloxannes liquides, tridimensionnellement réticulables.

15. Procédé suivant les revendications 12 à 14, caractérisé en ce que le polyorganosiloxanne ou le mélange de polyorganosiloxannes, non réticulé, que l'on met en oeuvre au cours de l'étape (a), présente une masse moléculaire moyenne de 1.000 à 100.000.

16. Procédé suivant les revendications 12 à 14, caractérisé en ce que le polyorganosiloxanne ou le mélange de polyorganosiloxannes, non réticulé, que l'on met en oeuvre au cours de l'étape (a), présente une masse moléculaire moyenne de 1.200 à 30.000.

17. Procédé selon les revendications 12 à 16, avec la variante que l'on disperse d'abord les polyorganosiloxannes liquides dans un milieu non miscible ou seulement faiblement miscible avec les polyorganosiloxannes et qu'on ne les réticule qu'ensuite de manière en soi connue, avant de les mélanger à la résine réactive ou au mélange de résines réactives à modifier, et on élimine éventuellement le milieu de dispersion après le mélange, de manière connue.

18. Procédé suivant la revendication 17, caractérisé en ce que l'on utilise de l'eau à titre de milieu dispersif.

19. Procédé suivant les revendications 12 à 16, caractérisé en ce que l'on disperse et réticule les polyorganosiloxannes liquides, non réticulés, directement, en une seule étape opératoire, dans la résine réactive ou le mélange de résines réactif, liquide.

20. Procédé suivant la revendication 19, caractérisé en ce que l'on met en oeuvre des polyorganosiloxannes chez les quels plus de 50% de tous les radicaux organiques de la chaîne principale siloxannique sont des radicaux méthyle.

21. Procédé suivant les revendications 12 à 20, caractérisé en ce qu'au cours de l'étape (a), on utilise, à titre d'agents de dispersion ou dispersifs, des composés à structure amphiphile, où on choisit une partie des radicaux de molécules amphiphiles de ce genre, en une manière telle que ces radicaux soient compatibles avec les polyorganosiloxannes mis en oeuvre, cependant que l'on choisit une autre

22

partie des radicaux de façon que ces radicaux soient compatibles avec la résine réactive ou le mélange de résines réactives.

22. Procédé suivant la revendication 21, caractérisé en ce que l'on utilise des agents de dispersion ou dispersifs qui possèdent une masse moléculaire moyenne de 300 à 50.000.

23. Procédé suivant les revendications 21 et 22, caractérisé en ce que l'on utilise, à titre d'agents dispersifs ou de dispersion, des copolymères qui possèdent une fraction polyorganosiloxannique et une fraction organique hydrocarbonée, qui est compatible avec la résine réactive ou le mélange de résines réactives.

24. Variante du procédé selon les revendications 12 à 23, comprenant les étapes opératoires (a) et (b), caractérisé en ce qu'au cours d'une étape opératoire supplémentaire (c), on réalise une réaction chimique entre les particules polyorganosiloxanniques et la résine réactive ou le mélange de résines réactives, en sorte qu'une liaison chimique soit établie entre les particules polyorganosiloxanniques et la résine réactive ou le mélange de résines réactives.

25. Procédé suivant la revendication 24, caractérisé en ce qu'au cours de l'étape (a), on met en oeuvre un agent de dispersion ou dispersif amphiphile comportant une partie organique hydrocarbonée, qui présente des radicaux réactifs qui, lors de l'étape opératoire (c) établissent des liaisons chimiques entre les particules polyorganosiloxanniques et la résine réactive ou le mélange de résines réactives.

26. Procédé suivant les revendications 24 et 25, caractérisé en ce qu'au cours de l'étape opératoire (c), on met en oeuvre, à titre d'agents de mise en réaction, des organoalkyloxysilannes et/ou des copolymères d'organosilicones avec des radicaux réactifs adaptés aux polyorganosiloxannes et aux résines réactives.

27. Procédé suivant les revendications 24 à 26, caractérisé en ce que l'on réalise la réaction chimique au cours de l'étape (c) en même temps que la dispersion et la réticulation des polyorganosiloxannes liquides dans la résine réactive ou le mélange de résines réactives, en une seule étape opératoire.

28. Utilisation des résines réactives modifiées selon l'une quelconque des revendications 1 à 11 pour la fabrication de matières duroplastiques résistant à la rupture et au choc, éventuellement démoulées, de matières plastiques renforcées de fibres, de matières isolantes dans le domaine de l'électrotechnique et de stratifiés en recourant à un traitement ultérieur et un durcissement usuels, caractérisé en ce qu'avant ou pendant le traitement ultérieur de la résine réactive modifiée, on réalise une réaction chimique entre les particules polyorganosiloxanniques et la résine réactive ou le mélange de résines réactives selon les revendications 24 à 27.